(19) **Europäisches Patentamt European Patent Office Office européen des brevets**

(11) **EP 1 359 685 B1**

(12) **FASCICULE DE BREVET EUROPEEN**

(45) Date de publication et mention
de la délivrance du brevet:
**13.02.2013 Bulletin 2013/07**

(51) Int Cl.:
*G06K 9/00* (2006.01)    *G06K 9/62* (2006.01)
*H04B 7/08* (2006.01)

(21) Numéro de dépôt: **03291056.4**

(22) Date de dépôt: **30.04.2003**

(54) **Procédé de séparation des sources pour des signaux cyclostationnaires**

Verfahren zur Quellentrennung für zyklostationäre Signale

Method for source separation for cyclostationary signals

(84) Etats contractants désignés:
**AT BE BG CH CY CZ DE DK EE ES FI FR GB GR HU IE IT LI LU MC NL PT RO SE SI SK TR**

(30) Priorité: **03.05.2002 FR 0205575**

(43) Date de publication de la demande:
**05.11.2003 Bulletin 2003/45**

(73) Titulaire: **Thales**
**75008 Paris (FR)**

(72) Inventeurs:
 • **Ferreol, Anne,**
   **Thales Intellectual Property**
   **94117 Arcueil cedex (FR)**
 • **Chevalier, Pascal,**
   **Thales Intellectual Property**
   **94117 Arcueil cedex (FR)**
 • **Albera, Laurent,**
   **Thales Intellectual Property**
   **94117 Arcueil cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
 • FERREOL A ET AL: "On the behavior of current second and higher order blind source separation methods for cyclostationary sources" IEEE TRANSACTIONS ON SIGNAL PROCESSING, JUNE 2000, IEEE, USA, vol. 48, no. 6, pages 1712-1725, XP002226430 ISSN: 1053-587X
 • FERREOL A ET AL: "Higher order blind source separation using the cyclostationarity property of the signals" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 avril 1997 (1997-04-21), pages 4061-4064, XP010226694 ISBN: 0-8186-7919-0
 • CHEVALIER P ET AL: "Behaviour of higher order blind source separation methods in the presence of cyclostationary correlated multipaths" HIGHER-ORDER STATISTICS, 1997., PROCEEDINGS OF THE IEEE SIGNAL PROCESSING WORKSHOP ON BANFF, ALTA., CANADA 21-23 JULY 1997, LOS ALAMITOS, CA, USA,IEEE COMPUT. SOC, US, 21 juillet 1997 (1997-07-21), pages 363-367, XP010239783 ISBN: 0-8186-8005-9

**Description**

L'invention concerne un procédé de traitement d'antennes pour des sources cyclostationnaires potentiellement non centrées ou centrées.

Elle s'applique par exemple pour les sources CPFSK à indice de modulation entier.

L'invention concerne, par exemple, un procédé de séparation de signaux potentiellement non centrés et cyclostationnaires reçus par un récepteur d'un système de communication comportant plusieurs sources ou émetteurs. Le terme cyclostationnaire désigne aussi le cas particulier des signaux stationnaires.

Elle s'applique aussi pour réaliser la goniométrie de sources cyclostationnaires potentiellement non centrées.

L'invention trouve son application notamment dans le domaine des radiocommunications, des télécommunications spatiales ou de l'écoute passive de ces liaisons, dans des gammes allant de la VLF (Very Low Frequency) à la EHF (Extremely High Frequency).

Dans la présente description on désigne sous l'expression « Séparation aveugle », une séparation des émetteurs sans aucune connaissance des signaux émis, sous l'expression « signal centré », un signal sans composante continue qui vérifie E[x(t)]=0, sous l'expression « signal non stationnaire », un signal dont les statistiques dépendent du temps.

Dans de nombreux contextes applicatifs, la réception des signaux d'intérêt pour le récepteur est très souvent perturbée par la présence d'autres signaux (ou sources) dits parasites, pouvant correspondre soit à des versions retardées des signaux d'intérêt (propagation par multi-trajets), soit à des sources interférentes aussi bien volontaires, qu'involontaires (émissions co-canal). C'est en particulier le cas pour les radiocommunications en zone urbaine, sujettes au phénomène de trajets multiples issus de réflexions du signal sur les obstacles fixes ou mobiles environnant et potentiellement perturbées par les émissions co-canal issues de cellules voisines réutilisant les mêmes fréquences (réseaux F/TDMA - abréviation anglo-saxonne de Frequency ou Time Division Multiple Access). C'est également le cas pour les liaisons ionosphériques HF (High Frequency) perturbées par la présence, à la réception, aussi bien de multi-trajets de propagation issus des réflexions sur les différentes couches ionosphériques que d'émetteurs parasites dûs à la forte congestion spectrale de la gamme HF.

Pour toutes ces applications, que ce soit à des fins de radiocommunication ou d'écoute et d'analyse technique des sources reçues, une séparation de celles-ci s'impose avant la mise en oeuvre d'autres traitements spécifiques à l'application considérée. En outre, pour certaines applications telles que l'écoute passive, les sources reçues sont totalement inconnues du récepteur (pas de séquences d'apprentissage disponible, forme d'onde inconnue, etc.) et leur localisation angulaire ou goniométrie peut s'avérer délicate (couplage entre capteurs) ou chère (calibration des aériens) à mettre en oeuvre. Pour cette raison, il peut s'avérer très avantageux de mettre en oeuvre une technique de séparation de sources de manière totalement autodidacte, c'est-à-dire en n'exploitant aucune information a priori sur les sources, en dehors de l'hypothèse d'indépendance statistique de celles-ci.

Les premiers travaux sur la séparation autodidacte de sources sont apparus au milieu des années 80 par les travaux de Jutten et Herault [1]. Depuis cette date, ces travaux n'ont cessé de se développer pour des mélanges de sources aussi bien convolutifs (canaux à multi-trajets de propagation étalés dans le temps) qu'instantanés (canaux sans distorsion). Une synthèse de ces travaux est présentée dans l'article [2] de P.Comon et P.Chevalier. Un certain nombre de techniques développées sont qualifiées de techniques à l'ordre 2 car elles n'exploitent que les informations contenues dans les statistiques d'ordre 2 des observations, référence [3] par exemple. En revanche, d'autres techniques, dites aux ordres supérieurs et décrites par exemple dans la référence [4], exploitent généralement en plus de l'information à l'ordre 2, l'information contenue dans les statistiques d'ordre supérieur à 2 des observations. Parmi ces dernières, les techniques à l'ordre 4 dites à cumulant ont reçu une attention toute particulière de part leur potentiel de performances (référence [2]) et la relative simplicité de leur mise en oeuvre.

Toutefois, la quasi-totalité des techniques de séparation autodidacte de sources disponibles à ce jour ont été conçues pour séparer des sources supposées stationnaires, centrées et ergodiques, à partir d'estimateurs des statistiques des observations qualifiés d'empiriques, non biaisés et consistants asymptotiquement sous les hypothèses précédentes.

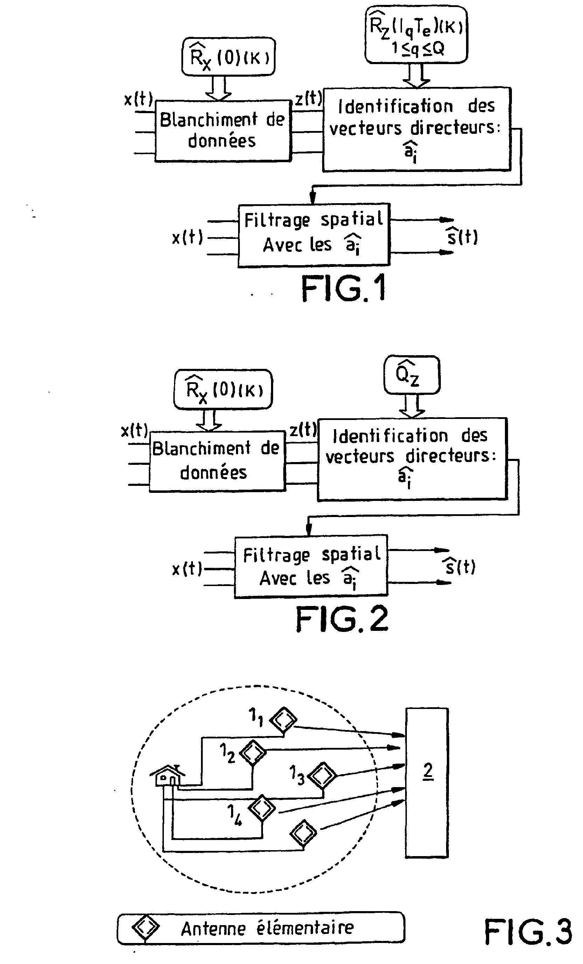

Deux familles de séparateurs à l'ordre 2 sont actuellement disponibles. Ceux de la première famille (F1) (référence [3] - méthode SOBI schématisée à la figure 1) visent à séparer des sources statistiquement indépendantes supposées stationnaires, centrées et ergodiques alors que ceux de la seconde famille (F2) (référence [6] - SOBI cyclique) sont conçus pour séparer des sources statistiquement indépendantes supposées cyclostationnaires, centrées et cycloergodiques.

Deux familles de séparateurs à l'ordre 4 sont actuellement disponibles. Par exemple, ceux de la première famille (F3) (référence [4] de J.F.Cardoso et A.Souloumiac - JADE schématisé à la figure 2) visent à séparer des sources statistiquement indépendantes supposées stationnaires, centrées et ergodiques alors que ceux de la seconde famille (F4) (référence de A.Ferreol et P.Chevalier [8] - JADE cyclique) sont conçus pour séparer des sources statistiquement indépendantes supposées, cyclostationnaires, centrées et cycloergodiques.

Toutefois, la plupart des sources rencontrées en pratique sont non stationnaires et plus particulièrement cyclostationnaires (sources modulées numériquement) et, pour certaines, déterministes (porteuses pures). En outre, certaines de ces sources ne sont pas centrées, ce qui est en particulier le cas pour les sources déterministes et pour certaines sources modulées numériquement et non linéairement comme les sources CPFSK à indice de modulation entier. Dans ces conditions, les estimateurs empiriques de statistiques classiquement utilisés pour mettre en oeuvre les techniques courantes de séparation autodidacte de sources n'ont plus aucune raison de rester non biaisés et consistants mais sont susceptibles de devenir biaisés asymptotiquement, ce qui peut empêcher la séparation des sources, comme cela est montré dans le document de A.Ferreol et P.Chevalier [5] pour des sources cyclostationnaires centrées (modulations numériques linéaires). Ce document propose un estimateur de cumulants non biaisés en présence de sources centrées mais n'évoque pas les sources non centrées.

L'invention concerne un procédé de traitement d'antennes sur des signaux cyclostationnaires potentiellement non centrés, caractérisé en ce qu'il comporte au moins une étape où un ou plusieurs estimateurs de statistiques des cumulants à l'ordre n, avec n supérieur ou égal à 4 est obtenu à partir des statistiques d'ordre r, avec r=1 à n-1, et pour une ou plusieurs valeurs de r, une étape de correction des estimateurs empiriques, à partir des fréquences cycliques détectées à l'ordre r, exploitant le caractère potentiellement non centré des observations.

Il comporte par exemple une étape de séparation des sources émettrices des signaux reçus en utilisant le ou lesdits estimateurs précités.

Il est aussi utilisé pour la goniométrie des signaux reçus.

D'autres caractéristiques et avantages de l'invention apparaîtront mieux à la lecture de la description qui suit d'un exemple de réalisation non limitatif annexé des figures qui représentent :

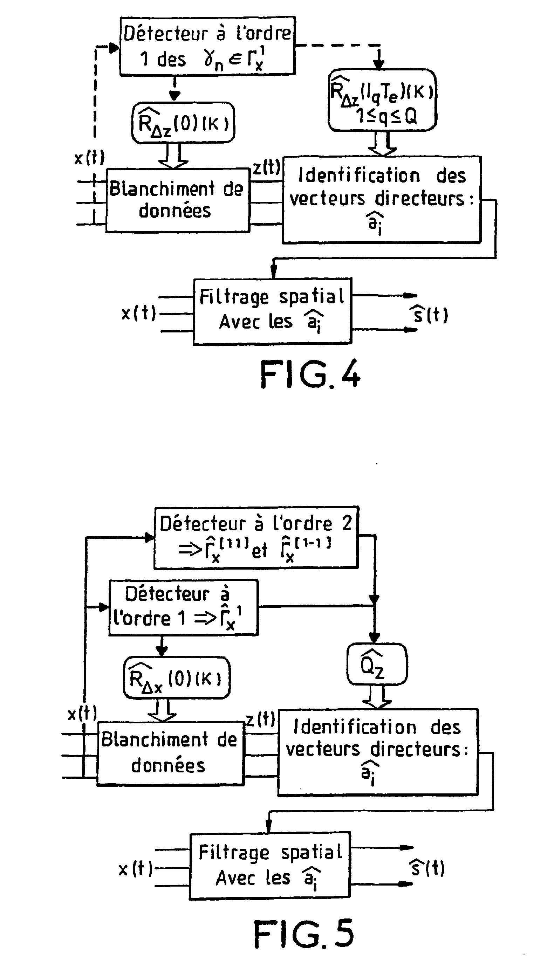

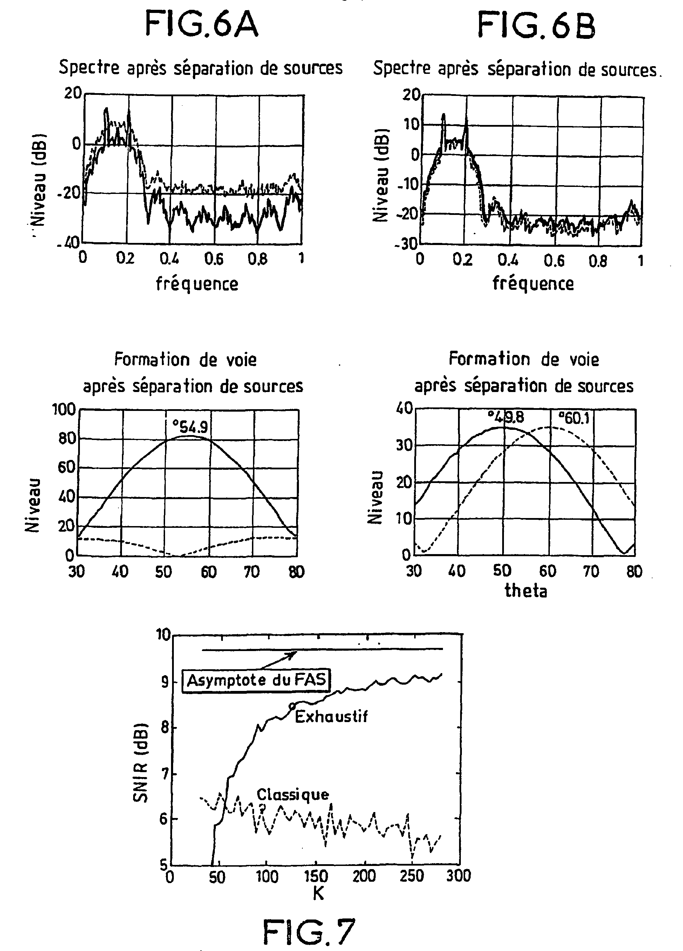

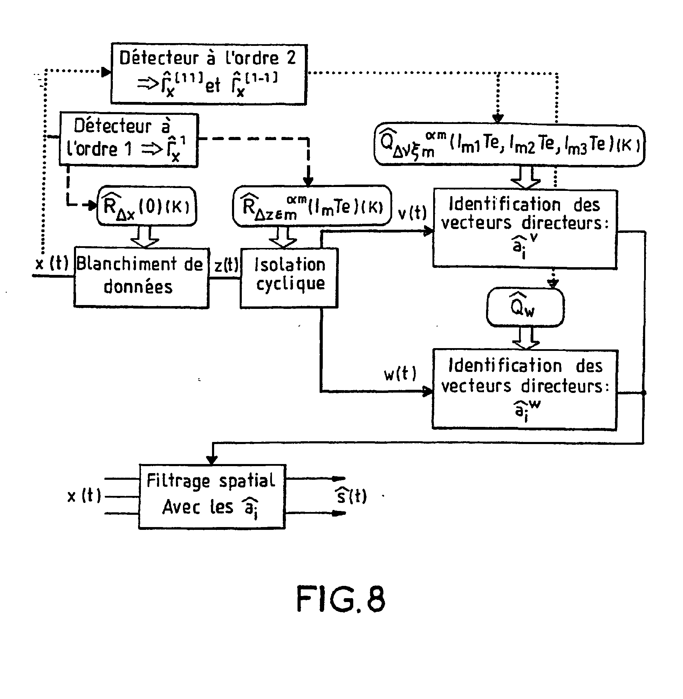

> ➢ Les figures 1 et 2 les techniques de séparation selon l'art antérieur, respectivement connues sous le nom de SOBI et de JADE,
> ➢ La figure 3 un exemple de récepteur selon l'invention,
> ➢ La figure 4 le schéma des étapes selon l'invention appliquée à la technique de séparation SOBI ,
> ➢ La figure 5 le schéma des étapes du procédé selon l'invention pour la technique de séparation JADE,
> ➢ Les figures 6A et 6B des résultats de séparation utilisant un estimateur classique ou un estimateur selon l'invention,
> ➢ La figure 7 la convergence de l'estimateur,
> ➢ La figure 8 un schéma des étapes mises en oeuvre selon l'invention pour le procédé JADE cyclique.

En résumé, le procédé selon l'invention permet le traitement, notamment de sources cyclostationnaires potentiellement non centrées ou centrées. Il s'applique, par exemple, pour la séparation des sources ou leur goniométrie. Il comporte au moins une étape qui utilise un estimateur des statistiques à l'ordre n construit notamment en tenant compte des statistiques à l'ordre r, avec r variant de 1 à n-1, et pour une ou plusieurs valeurs de r, une étape de correction de l'estimateur à partir de fréquences cycliques détectées à l'ordre r exploitant le caractère potentiemment non centré des observations.

La figure 1 schématise un exemple de récepteur comportant par exemple N capteurs de réception ($1_1$, $1_2$, $1_3$, $1_4$) reliés chacun à plusieurs entrées d'un dispositif de traitement 2 tel qu'un processeur adapté à exécuter les étapes du procédé décrit ci-après.

Avant d'expliciter plusieurs variantes de mise en oeuvre du procédé selon l'invention, la description décrit la manière d'obtenir les estimateurs, par exemple à l'ordre 2, ou à l'ordre 4, ainsi que la détection des fréquences cycliques

**Modélisation du signal**

Une antenne à $N$ capteurs est supposée recevoir un mélange bruité de $P$ $(P \leq N)$ sources à bande étroite (BE) et statistiquement indépendantes. Sous ces hypothèses, le vecteur, $x(t)$, des envelopes complexes des signaux en sortie des capteurs s'écrit, à l'instant $t$,

$$x(t) \; = \; \sum_{p=1}^{P} \; m_p(t) \, e^{j(2\pi\Delta f_p t + \phi_p)} \; a_p \; + \; b(t) \; \triangleq \; A \, m_c(t) \; + \; b(t) \qquad (1)$$

où $b(t)$ est le vecteur bruit, supposé centré, stationnaire, circulaire et spatialement blanc, $m_p(t)$, $\Delta f_p$, $\phi_p$ et $a_p$ correspondent respectivement à l'enveloppe complexe, BE, cyclostationnaire et potentiellement non centrée (déterministe le cas échéant), au résidu de porteuse, à la phase et au vecteur directeur de la source $p$, $m_c(t)$ est le vecteur dont les composantes sont les signaux $m_{pc}(t) \triangleq m_p(t) \exp[j(2\pi\Delta f_p t + \phi_p)]$ et $A$ est la matrice $(N \times P)$ dont les colonnes sont les vecteurs $a_p$.

**Statistiques des observations**

Statistiques d'ordre 1

Dans le cas général de sources cyclostationnaires et non centrées, les statistiques d'ordre 1 du vecteur $x(t)$, donné par (1), s'écrivent

$$e_x(t) \triangleq \mathrm{E}[x(t)] = \sum_{p=1}^{P} e_p(t) \, e^{j(2\pi\Delta f_p t + \phi_p)} \, a_p \triangleq \sum_{p=1}^{P} e_{pc}(t) \, a_p \triangleq A \, e_{mc}(t) \quad (2)$$

où $e_p(t)$, $e_{pc}(t)$ et $e_{mc}(t)$ sont les espérances mathématiques respectivement de $m_p(t)$, $m_{pc}(t)$ et $m_c(t)$. Les vecteurs $e_p(t)$ et $e_{pc}(t)$ admettent une décomposition en série de Fourier et on obtient

$$e_{pc}(t) \triangleq \mathrm{E}[m_{pc}(t)] = \sum_{\gamma_{pc} \in \Gamma^1_{pc}} e_{pc}^{\gamma_{pc}} \, e^{j2\pi\gamma_{pc} t} = \sum_{\gamma_p \in \Gamma^1_p} e_p^{\gamma_p} \, e^{j[2\pi(\Delta f_p + \gamma_p)t + \phi_p]} \quad (3)$$

où $\Gamma^1_p := \{\gamma_p\}$ et $\Gamma^1_{pc} := \{\gamma_{pc} = \gamma_p + \Delta f_p\}$ sont les ensembles des fréquences cycliques $\gamma_p$ et $\gamma_{pc}$ respectivement de $e_p(t)$ et $e_{pc}(t)$, $e_p^{\gamma_p}$ et $e_{pc}^{\gamma_{pc}}$ sont les moyennes cycliques de respectivement $m_p(t)$ et $m_{pc}(t)$, définies par

$$e_p^{\gamma_p} \triangleq \; < e_p(t) \, e^{-j2\pi\gamma_p t} >_c \qquad\qquad\qquad (4)$$

$$e_{pc}^{\gamma_{pc}} \triangleq \; < e_{pc}(t) \, e^{-j2\pi\gamma_{pc} t} >_c \; = \; e_p^{\gamma_{pc}-\Delta f_p} \, e^{j\phi_p} \qquad\qquad (5)$$

où le symbole $< f(t) >_c \triangleq \lim\limits_{T \to \infty} (1/T) \int_{-T/2}^{T/2} f(t)\mathrm{d}t$ correspond à l'opération de moyennage temporel en temps continu de $f(t)$ sur un horizon d'observation infini. En conséquence, les vecteurs $e_{mc}(t)$ et $e_x(t)$ admettent aussi une décomposition en série de Fourier et en utilisant (2) et (3), on obtient

$$e_{mc}(t) \triangleq \sum_{\gamma \in \Gamma^1_x} e_{mc}^{\gamma} \, e^{j2\pi\gamma t} \qquad\qquad\qquad (6)$$

$$e_x(t) \triangleq \sum_{\gamma \in \Gamma_x^1} e_x^\gamma \, e^{j2\pi\gamma t} = \sum_{\gamma \in \Gamma_x^1} A \, e_{mc}^\gamma \, e^{j2\pi\gamma t} = \sum_{p=1}^{P} \sum_{\gamma_{pc} \in \Gamma_{pc}^1} e_{pc}^{\gamma_{pc}} \, e^{j2\pi\gamma_{pc}t} \, a_p \qquad (7)$$

où $\Gamma_x^1 = \cup_{1 \leq p \leq P} \{\Gamma_{pc}^1\}$ est l'ensemble des fréquences cycliques $\gamma$ de $e_{mc}(t)$ et $e_x(t)$, $e_{mc}^\gamma$ et $e_x^\gamma$ sont respectivement les moyennes cycliques de $m_c(t)$ et $x(t)$, définies par

$$e_{mc}^\gamma = \ < e_{mc}(t) \, e^{-j2\pi\gamma t} >_c \qquad (8)$$

$$e_x^\gamma = \ < e_x(t) \, e^{-j2\pi\gamma t} >_c \qquad (9)$$

Sous ces hypothèses, le vecteur (quasi)-cyclostationnaire $x(t)$ peut se décomposer en la somme d'une partie déterministe et (quasi)-periodique $e_x(t)$ et d'une partie aléatoire centrée et (quasi)-cyclostationnaire $\Delta x(t)$ telles que

$$\Delta x(t) \triangleq x(t) - e_x(t) = A \, \Delta m_c(t) + b(t) \qquad (10)$$

où $\Delta m_c(t) \triangleq m_c(t) - e_{mc}(t)$ est le vecteur centré des signaux sources, de composantes

$$\Delta m_{pc}(t) \triangleq m_{pc}(t) - e_{pc}(t) = \Delta m_p(t) \, e^{j(2\pi\Delta f_p t + \phi_p)}$$

où

$$\Delta m_p(t) \triangleq m_p(t) - e_p(t).$$

*Cas particuliers*

A titre indicatif, $e_p(t) = 0$ pour une source $p$ modulée numériquement et linéairement, laquelle est centrée. En revanche, $e_p(t) \neq 0$ pour une source $p$ déterministe (porteuse) ainsi que pour certaines sources modulées numériquement et non linéairement comme les CPFSK d'indice entier, dont l'enveloppe complexe s'écrit.

$$m_p(t) = \pi_p^{1/2} \sum_n \exp\{j[\theta_{pn} + 2\pi f_{dp} \, a_n^p \, (t - nT_p)]\} \, \text{Rect}_p(t - nT_p) \qquad (11)$$

où $T_p$ correspond à la durée symbole de la source, $\pi_p \triangleq \ < E[|m_p(t)|^2] >_c$ est la puissance moyenne de la source $p$ reçue par un capteur omnidirectionnel, les $a_n^p$ sont les symboles transmis, $M_p$-aires, supposés i.i.d et prenant leurs valeurs dans l'alphabet $\pm 1, \pm 3,..., \pm (M_p - 1)$, où $M_p$ est généralement une puissance de 2, $\text{Rect}_p(t)$ est le pulse rectangulaire d'amplitude 1 et de durée $T_p$, $f_{dp} \triangleq h_p/2T_p$ est la déviation en fréquence, $h_p$ est l'indice de modulation de la source et $\theta_{pn}$, qui correspond à l'accumulation de tous les symboles jusqu'à l'instant $(n - 1)T_p$, est défini par

$$\theta_{pn} \quad \triangleq \quad 2\pi f_{dp} T_p \sum_{k= -\infty}^{n-1} a_k^p \qquad (12)$$

Pour des symboles $M_p$-aires, la source CPFSK associée est qualifiée de source $M_p$-CPFSK. Pour ce type de sources, l'ensemble $\Gamma_p^1$ des fréquences cycliques d'ordre 1 de la source $p$ s'écrit $\Gamma_p^1 = \{\gamma_p = \pm (2k + 1) f_{dp}, 0 \leq k \leq (M_p - 2)/2\}$. Dans ces conditions, on obtient

$$e_p^\gamma \quad = \quad \pm \pi_p^{1/2} \frac{1}{M_p} \quad \text{pour} \quad \gamma \in \Gamma_p^1 \qquad (13)$$

Statistiques d'ordre 2

Sous les hypothèses précédentes (cyclostationnaires non centrées), les statistiques du second ordre des observations sont caractérisées par les deux matrices de corrélation $R_{x\varepsilon}(t, \tau)$ pour $\varepsilon=1$ et $\varepsilon=-1$, dépendantes du temps courant $t$ et définies par

$$R_{x\varepsilon}(t, \tau) \triangleq E[x(t) x(t - \tau)^{\varepsilon T}] = A R_{mc\varepsilon}(t, \tau) A^{\varepsilon T} + \eta_2(\tau) \delta(1 + \varepsilon) I \qquad (14)$$

où $\varepsilon = \pm 1$, avec pour convention $x^1 \triangleq x$ et $x^{-1} \triangleq x^*$, $*$ est l'opération de conjugaison complexe, $\delta(.)$ est le symbole de Kronecker, $^T$ signifie transposé, $\eta_2(\tau)$ est la fonction de corrélation du bruit sur chaque capteur, I est la matrice identité, la matrice $\tau) \triangleq E[m_c(t) m_c(t - \tau)^{\varepsilon T}]$ introduit les première et seconde matrices de corrélation du vecteur $m_c(t)$.

Dans le cas général de sources cyclostationnaires non centrées, utilisant (10) dans (14), la matrice $R_{x\varepsilon}(t, \tau)$ prend la forme suivante

$$R_{x\varepsilon}(t, \tau) \quad = \quad R_{\Delta x\varepsilon}(t, \tau) + e_x(t) e_x(t - \tau)^{\varepsilon T} \qquad (15)$$

où $R_{\Delta x\varepsilon}(t, \tau)$ introduit les première et seconde matrices de covariance de $x(t)$ ou de corrélation de $\Delta x(t)$, definies par

$$R_{\Delta x\varepsilon}(t, \tau) \triangleq E[\Delta x(t) \Delta x(t - \tau)^{\varepsilon T}] = A R_{\Delta mc\varepsilon}(t, \tau) A^{\varepsilon T} + \eta_2(\tau) \delta(1 + \varepsilon) I \qquad (16)$$

où $R_{\Delta mc\varepsilon}(t, \tau) \triangleq E[\Delta m_c(t) \Delta m_c(t - \tau)^{\varepsilon T}]$ définit les première et seconde matrices de covariance de $m_c(t)$ telles que

$$R_{mc\varepsilon}(t, \tau) \quad = \quad R_{\Delta mc\varepsilon}(t, \tau) + e_{mc}(t) e_{mc}(t - \tau)^{\varepsilon T} \qquad (17)$$

Utilisant (1), (10) et l'hypothèse d'indépendance statistique des sources dans (16), on obtient

$$R_{\Delta x \varepsilon}(t, \tau) = \sum_{p=1}^{P} r_{\Delta p \varepsilon}(t, \tau)\, e^{j[(1+\varepsilon)(2\pi \Delta f_p t + \phi_p) - 2\pi \Delta f_p \tau \varepsilon]}\, a_p\, a_p^{\varepsilon T} + \eta_2(\tau)\, I$$

$$= \sum_{p=1}^{P} r_{\Delta p c \varepsilon}(t, \tau)\, a_p\, a_p^{\varepsilon T} + \eta_2(\tau)\, \delta(1+\varepsilon)\, I \tag{18}$$

où $r_{\Delta p \varepsilon}(t, \tau) \triangleq E[\Delta m_p(t)\, \Delta m_p(t - \tau)^\varepsilon]$, $r_{\Delta p c \varepsilon}(t, \tau) \triangleq E[\Delta m_{pc}(t)\, \Delta m_{pc}(t - \tau)^\varepsilon]$. Des expressions (2) et (18) on déduit finalement une nouvelle écriture de l'expression (15), donnée par

$$R_{x\varepsilon}(t, \tau) = \sum_{p=1}^{P} r_{\Delta p c \varepsilon}(t, \tau)\, a_p\, a_p^{\varepsilon T} + \sum_{p=1}^{P} \sum_{q=1}^{P} e_{pc}(t)\, e_{qc}(t-\tau)^\varepsilon\, a_p\, a_q^{\varepsilon T} + \eta_2(\tau)\, \delta(1+\varepsilon)\, I$$

$$\tag{19}$$

Pour des sources cyclostationnaires, les fonctions de covariance $r_{\Delta p c \varepsilon}(t, \tau)$, $1 \leq p \leq P$, et donc les matrices $R_{\Delta mc\varepsilon}(t, \tau)$ et $R_{\Delta x \varepsilon}(t, \tau)$ sont des fonctions (quasi-) ou polypériodiques du temps $t$, admettant une décomposition en série de Fourier et on obtient

$$r_{\Delta p c \varepsilon}(t, \tau) = \sum_{\alpha_{\Delta p c \varepsilon} \in \Gamma_{\Delta pc}^{[1,\varepsilon]}} r_{\Delta p c \varepsilon}^{\alpha_{\Delta p c \varepsilon}}(\tau)\, e^{j2\pi \alpha_{\Delta p c \varepsilon} t} \tag{20}$$

$$R_{\Delta x \varepsilon}(t, \tau) = \sum_{\alpha_{\Delta x \varepsilon} \in \Gamma_{\Delta x}^{[1,\varepsilon]}} R_{\Delta x \varepsilon}^{\alpha_{\Delta x \varepsilon}}(\tau)\, e^{j2\pi \alpha_{\Delta x \varepsilon} t} \tag{21}$$

où $\Gamma_{\Delta pc}^{[1,\varepsilon]} = \{\alpha_{\Delta p c \varepsilon}\}$ est l'ensemble des fréquences cycliques $\alpha_{\Delta p c \varepsilon}$ de $r_{\Delta p c \varepsilon}(t, \tau)$, $\Gamma_{\Delta x}^{[1,\varepsilon]} = \{\alpha_{\Delta x \varepsilon}\} = \cup_{1 \leq p \leq P} \{\Gamma_{\Delta pc}^{[1,\varepsilon]}\}$ est l'ensemble des fréquences cycliques $\alpha_{\Delta x \varepsilon}$ de $R_{\Delta x \varepsilon}(t, \tau)$, les quantités $r_{\Delta p c \varepsilon}^{\alpha_{\Delta p c \varepsilon}}(\tau)$ définissent les première ($\varepsilon = -1$) et seconde ($\varepsilon = 1$) fonctions de covariance cyclique de $m_{pc}(t)$ alors que les matrices $R_{\Delta x \varepsilon}^{\alpha_{\Delta x \varepsilon}}(\tau)$ définissent les première et seconde matrices de covariance cyclique de $x(t)$, definies respectivement par

$$r_{\Delta p c \varepsilon}^{\alpha_{\Delta p c \varepsilon}}(\tau) = \langle r_{\Delta p c \varepsilon}(t, \tau)\, e^{-j2\pi \alpha_{\Delta p c \varepsilon} t} \rangle_c \tag{22}$$

$$R_{\Delta x \varepsilon}^{\alpha_{\Delta x \varepsilon}}(\tau) = \langle R_{\Delta x \varepsilon}(t, \tau)\, e^{-j2\pi \alpha_{\Delta x \varepsilon} t} \rangle_c = A\, R_{\Delta mc\varepsilon}^{\alpha_{\Delta x \varepsilon}}(\tau)\, A^{\varepsilon T} + \eta_2(\tau)\, \delta(\alpha_{\Delta x \varepsilon})\, \delta(1+\varepsilon)\, I \tag{23}$$

où $R_{\Delta mc\varepsilon}^{\alpha_{\Delta x\varepsilon}}(\tau)$ définit les première et seconde matrices de covariance cyclique de $m_c(t)$. Utilisant les expressions (7) et (21) dans (15), on obtient

$$R_{x\varepsilon}(t, \tau) \;=\; \sum_{\alpha_{\Delta x\varepsilon}\in \Gamma_{\Delta x}^{[1,\varepsilon]}} R_{\Delta x\varepsilon}^{\alpha_{\Delta x\varepsilon}}(\tau)\, e^{j2\pi\alpha_{\Delta x\varepsilon}t} \;+\; \sum_{\gamma\in \Gamma_x^1}\sum_{\omega\in \Gamma_x^1} e_x^\gamma\, e_x^\omega\, {}^{\varepsilon T}e^{-j2\pi\omega\tau\varepsilon}\, e^{j2\pi(\gamma + \omega\varepsilon)t}$$

$$(24)$$

ce qui montre que les matrices $R_{x\varepsilon}(t, \tau)$ admettent une décomposition en série de Fourier

$$R_{x\varepsilon}(t, \tau) \;=\; \sum_{\alpha_{x\varepsilon}\in \Gamma_x^{[1,\varepsilon]}} R_{x\varepsilon}^{\alpha_{x\varepsilon}}(\tau)\, e^{j2\pi\alpha_{x\varepsilon}t} \qquad\qquad (25)$$

où $\Gamma_x^{[1,\varepsilon]} = \{\alpha_{x\varepsilon}\} = \Gamma_{\Delta x}^{[1,\varepsilon]}\cup \{\Gamma_x^1\, O_\varepsilon\, \Gamma_x^1\}$ est l'ensemble des fréquences cycliques $\alpha_{x\varepsilon}$ de $R_{x\varepsilon}(t, \tau)$, $\Gamma_x^1\, O_\varepsilon\, \Gamma_x^1 = \{\alpha = \gamma + \varepsilon\omega$ où $\gamma \in \Gamma_x^1,$ , $\omega \in \Gamma_x^1\}$, les matrices $R_{x\varepsilon}^{\alpha_{x\varepsilon}}(\tau)$ sont les première ($\varepsilon = $ -1) et seconde ($\varepsilon = $ +1) matrices de corrélation cyclique de $x(t)$, définies par

$$R_{x\varepsilon}^{\alpha_{x\varepsilon}}(\tau) \;=\; < R_{x\varepsilon}(t, \tau)\, e^{-j2\pi\alpha_{x\varepsilon}t} >_c = A\; R_{mc\varepsilon}^{\alpha_{x\varepsilon}}(\tau)\, A^{\varepsilon T} + \; \eta_2(\tau)\, \delta(\alpha_{x\varepsilon})\, \delta(1 + \varepsilon)\; I \quad (26)$$

où $R_{mc\varepsilon}^{\alpha_{x\varepsilon}}(\tau)$ définit les première et seconde matrices de corrélation cyclique de $m_c(t)$. En particulier, pour la fréquence cyclique zéro, la matrice $R_{x\varepsilon}^{\alpha_{x\varepsilon}}(\tau)$ correspond à la moyenne temporelle en $t$, $R_{x\varepsilon}(\tau)$, de $R_{x\varepsilon}(t, \tau)$ laquelle s'écrit, utilisant (14),

$$R_{x\varepsilon}(\tau) \;\overset{\Delta}{=}\; < R_{x\varepsilon}(t, \tau) >_c \;=\; A\, R_{mc\varepsilon}(\tau)\, A^{\varepsilon T} + \; \eta_2(\tau)\, \delta(1 + \varepsilon)\; I \qquad (27)$$

où, utilisant (17), la matrice $R_{mc\varepsilon}(\tau) \overset{\Delta}{=} < R_{mc\varepsilon}(t, \tau) >_c$ s'écrit

$$R_{mc\varepsilon}(\tau) \;\overset{\Delta}{=}\; < R_{mc\varepsilon}(t, \tau) >_c = R_{\Delta mc\varepsilon}(\tau) + < e_{mc}(t)\, e_{mc}(t - \tau)^{\varepsilon T} >_c = \; R_{\Delta mc\varepsilon}(\tau) + E_{mc\varepsilon}(\tau)$$

$$(28)$$

où

$$R_{\Delta mc\varepsilon}(\tau) \;\overset{\Delta}{=}\; < R_{\Delta mc\varepsilon}(t, \tau) >_c \; \text{et}\; E_{mc\varepsilon}(\tau) \overset{\Delta}{=} < e_{mc}(t)\, e_{mc}(t - \tau)^{\varepsilon T} >_c.$$

Estimateur empirique des statistiques d'ordre 2

En pratique, les statistiques d'ordre 2 des observations sont inconnues a priori et doivent être estimées par moyennage temporel sur une durée d'observation finie, à partir d'un nombre $K$ d'échantillons, $x(k)$ $(1 \leq k \leq K)$, du vecteur observation $x(t)$, utilisant la propriété d'ergodicité de celles-ci dans le cas stationnaire et de cycloergodicité de celles-ci dans le cas cyclostationnaire. En notant $T_e$ la période d'échantillonnage, l'estimation de la matrice de corrélation cyclique $R_{x\varepsilon}^{\alpha}(\tau)$ pour $\tau = lT_e$, laquelle ne correspond à une matrice de cumulants que pour des observations centrées, s'effectue à partir de l'estimateur $\hat{R}_{x\varepsilon}^{\alpha}(lT_e)(K)$ qualifié d'empirique et défini par

$$\hat{R}_{x\varepsilon}^{\alpha}(lT_e)(K) \quad \triangleq \quad \frac{1}{K} \sum_{k=1}^{K} \; x(k) \; x(k-l)^{\varepsilon T} \, e^{-j2\pi\alpha kT_e} \qquad (29)$$

Le procédé selon l'invention comporte par exemple une nouvelle étape pour déterminer un estimateur d'ordre 2.

**Nouvel estimateur des cumulants cycliques d'ordre 2 des observations**

En présence d'observations non centrées, les matrices de corrélation des observations $R_{x\varepsilon}(t, \tau)$ ne correspondent plus aux matrices de covariance ou de cumulants d'ordre 2 des observations, comme le montre l'expression (15). Il en va de même des matrices de corrélation cyclique, $R_{x\varepsilon}^{\alpha_{x\varepsilon}}(\tau)$, définies par (26), qui, pour des observations non centrées, ne correspondent plus aux matrices de covariance ou de cumulants d'ordre 2 cycliques, $R_{\Delta x\varepsilon}^{\alpha_x \varepsilon}(\tau)$, définies par (22) pour $\alpha_{\Delta x\varepsilon} = \alpha_{x\varepsilon}$. Dans ces conditions, un bon fonctionnement des séparateurs à l'ordre 2 F1 et F2 vis-à-vis de sources cyclostationnaires potentiellement non centrées ne peut être obtenu qu'en exploitant les informations contenues dans les matrices $R_{\Delta x\varepsilon}^{\alpha_x \varepsilon}(\tau)$ plutôt que dans les matrices $R_{x\varepsilon}^{\alpha_{x\varepsilon}}(\tau)$. Aussi, dans la mesure où, pour des sources cyclostationnaires et cycloergodiques, l'estimateur empirique (29) est un estimateur asymptotiquement non biaisé et consistant de la matrice de corrélation cyclique $R_{x\varepsilon}^{\alpha}(lT_e)$, on utilise, pour des observations non centrées, un autre estimateur visant à estimer de manière asymptotiquement non biaisée et consistante la matrice de covariance cyclique $R_{\Delta x\varepsilon}^{\alpha}(lT_e)$.

On déduit des expressions (24) et (25), l'expression de la matrice de covariance cyclique $R_{\Delta x\varepsilon}^{\alpha}(lT_e)$ en fonction de celle de $R_{x\varepsilon}^{\alpha}(lT_e)$, donnée par

$$R_{\Delta x\varepsilon}^{\alpha}(lT_e) \; = \; R_{x\varepsilon}^{\alpha}(lT_e) \; - \; \sum_{\omega \in \Gamma_x^1} e_x^{\alpha-\omega\varepsilon} \, e_x^{\omega\varepsilon T} \, e^{-j2\pi\omega\varepsilon \, lT_e} \qquad (30)$$

Ainsi, l'estimation de la matrice de covariance cyclique $R_{\Delta x\varepsilon}^{\alpha}(lT_e)$ s'effectue à partir de l'estimateur $\hat{R}_{\Delta x\varepsilon}^{\alpha}(lT_e)(K)$ défini par

$$\hat{R}_{\Delta x\varepsilon}^{\alpha}(lT_e)(K) \quad \triangleq \quad \hat{R}_{x\varepsilon}^{\alpha}(lT_e)(K) \; - \; \sum_{\omega \in \Gamma_x^1} \hat{e}_x^{\alpha-\omega\varepsilon}(K) \, \hat{e}_x^{\omega}(K)^{\varepsilon T} \, e^{-j2\pi\omega\varepsilon \, lT_e} \qquad (31)$$

où $\hat{R}_{x\varepsilon}^{\alpha}(lT_e)(K)$ est défini par (29) et où $\hat{e}_x^{\omega}(K)$ est défini par

$$\hat{e}_x^{\omega}(K) \quad \triangleq \quad \frac{1}{K} \sum_{k=1}^{K} x(k)\, e^{-j2\pi\omega kT_e} \tag{32}$$

Dans ces conditions, sous l'hypothèse d'observations cyclostationnaires et cycloergodiques, centrées ou non, l'estimateur (31) est un estimateur asymptotiquement non biaisé et consistant de la matrice de covariance (ou de cumulants d'ordre 2) cyclique $R_{\Delta x\varepsilon}^{\alpha}(lT_e)$. En particulier, les séparateurs F1 doivent exploiter l'estimateur (31) pour $\alpha = 0$ et $\varepsilon = -1$, noté $\hat{R}_{\Delta x}(lT_e)(K)$, et défini par

$$\hat{R}_{\Delta x}(lT_e)(K) \quad \triangleq \quad \hat{R}_x(lT_e)(K) \quad - \quad \sum_{\omega \in \Gamma_x^1} \hat{e}_x^{\omega}(K)\, \hat{e}_x^{\omega}(K)^{\dagger}\, e^{j2\pi\omega lT_e} \tag{33}$$

où $\hat{R}_x(lT_e)(K)$ est défini par (29) avec $\alpha = 0$ et $\varepsilon = -1$.

Selon une autre variante de réalisation, le procédé comprend une étape de détermination d'un nouvel estimateur d'ordre 4.

Statistiques d'ordre 3

Sous les hypothèses précédentes, les statistiques (moments) du troisième ordre des observations sont définies par (34)

$$T_{x\varepsilon}(t, \tau_1, \tau_2)[i, j, k] \triangleq \mathrm{E}[x_i(t)\, x_j(t - \tau_1)^{\varepsilon}\, x_k(t - \tau_2)] = \mathrm{E}[\Delta x_i(t)\, \Delta x_j(t - \tau_1)^{\varepsilon}\, \Delta x_k(t - \tau_2)] + e_x[i](t)\, \mathrm{E}[\Delta x_j(t - \tau_1)^{\varepsilon}\, \Delta x_k(t - \tau_2)] + e_x[k](t - \tau_2)\, \mathrm{E}[\Delta x_i(t)\, \Delta x_j(t - \tau_1)^{\varepsilon}] + e_x[j](t - \tau_1)^{\varepsilon}\, \mathrm{E}[\Delta x_i(t)\, \Delta x_k(t - \tau_2)] + 4\, e_x[i](t)\, e_x[j](t - \tau_1)^{\varepsilon}\, e_x[k](t - \tau_2)$$

où $e_x[i](t) = e_{xi}(t)$ est la composante $i$ de $\mathbf{e}_x(t)$. Les cumulants d'ordre 3 sont les quantités $\mathrm{E}[\Delta_{xi}(t)\, \Delta x_j(t - \tau_1)^{\varepsilon}\, \Delta x_k(t - \tau_2)]$. En supposant que le terme $T_{x\varepsilon}(t, \tau_1, \tau_2)[i, j, k]$ est l'élément $[i, N(j - 1) + k]$ de la matrice $T_{x\varepsilon}(t, \tau_1, \tau_2)$, de dimension ($N$ x $N^2$), on obtient une expression de celle-ci donnée par

$$T_{x\varepsilon}(t, \tau_1, \tau_2) = A\, T_{mc\varepsilon}(t, \tau_1, \tau_2)(A \otimes A^{\varepsilon})^{\varepsilon T} = \sum_{i, j, k\, =\, 1}^{P} T_{mc\varepsilon}(t, \tau_1, \tau_2)[i, j, k]\, a_i\, [a_j \otimes a_k^{\varepsilon}]^{\varepsilon T}$$

où $T_{mc\varepsilon}(t, \tau_1, \tau_2)$ est la matrice ($P$ x $P^2$) dont les coefficients sont les quantités $T_{mc\varepsilon}(t, \tau_1, \tau_2)[i, j, k]$ définies par

$$T_{mc\varepsilon}(t, \tau_1, \tau_2)[i,j,k] \quad = \quad E[m_{ic}(t)\, m_{jc}(t-\tau_1)^\varepsilon\, m_{kc}(t-\tau_2)] \quad =$$

$$E[\Delta m_{ic}(t)\, \Delta m_{ic}(t-\tau_1)^\varepsilon\, \Delta m_{ic}(t-\tau_2)]\, \delta(i-j)\, \delta(i-k) + e_{ic}(t)\, E[\Delta m_{jc}(t-\tau_1)^\varepsilon\, \Delta m_{jc}(t-\tau_2)]$$

$$\delta(j-k)$$

$$+ \ e_{kc}(t-\tau_2)\, E[\Delta m_{ic}(t)\, \Delta m_{ic}(t-\tau_1)^\varepsilon]\, \delta(i-j) \ + \ e_{jc}(t-\tau_1)^\varepsilon\, E[\Delta m_{ic}(t)\, \Delta m_{ic}(t-\tau_2)]$$

$$\delta(i-k)$$

$$+ \ 4\, e_{ic}(t)\, e_{jc}(t-\tau_1)^\varepsilon\, e_{kc}(t-\tau_2) \qquad\qquad\qquad\qquad (36)$$

Pour des sources cyclostationnaires, les matrices de moments d'ordre 3, $T_{mc\varepsilon}(t, \tau_1, \tau_2)$ et $T_{x\varepsilon}(t, \tau_1, \tau_2)$, sont des fonctions (quasi-) ou poly-périodiques du temps t, admettant une décomposition en série de Fourier et on obtient

$$T_{x\varepsilon}(t, \tau_1, \tau_2) \quad = \quad \sum_{\nu_{x\varepsilon} \in \Gamma_x^{[1,\varepsilon,1]}} T_{x\varepsilon}^{\nu_{x\varepsilon}}(\tau_1, \tau_2)\, e^{j2\pi\nu_{x\varepsilon}t} \qquad\qquad\qquad (37)$$

où $\Gamma_x^{[1,\varepsilon,1]} = \{\nu_{x\varepsilon}\}$ est l'ensemble des fréquences cycliques $\nu_{x\varepsilon}$ de $T_{x\varepsilon}(t, \tau_1, \tau_2)$ et $T_{x\varepsilon}^{\nu_{x\varepsilon}}(\tau_1, \tau_2)$ une matrice de moments d'ordre 3 cycliques de $x(t)$, definie respectivement par

$$T_{x\varepsilon}^{\nu_{x\varepsilon}}(\tau_1, \tau_2) \ = \ < T_{x\varepsilon}(t, \tau_1, \tau_2)\, e^{-j2\pi\nu_{x\varepsilon}t} >_c \ = \ A\ T_{mc\varepsilon}^{\nu_{x\varepsilon}}(\tau_1, \tau_2)\, (A \otimes A^\varepsilon)^{\varepsilon T} \quad (38)$$

où $\otimes$ correspond au produit de Kronecker.

<u>Statistiques d'ordre 4</u>

Sous les hypothèses précédentes (signaux non centrés et cyclostationnaires), les statistiques d'ordre 4 des observations sont les cumulants d'ordre 4 définis par

$$Q_{x\zeta}(t, \tau_1, \tau_2, \tau_3)[i,j,k,l] \quad \triangleq \quad Cum(x_i(t), x_j(t-\tau_1)^{\zeta_1}, x_k(t-\tau_2)^{\zeta_2}, x_l(t-\tau_3))$$

$$= \mathrm{Cum}(\Delta x_i(t),\ \Delta x_j(t - \tau_1)^{\zeta 1},\ \Delta x_k(t - \tau_2)^{\zeta 2},\ \Delta x_l(t - \tau_3))$$

$$= \mathrm{E}[\Delta x_i(t)\Delta x_j(t - \tau_1)^{\zeta 1}\Delta x_k(t - \tau_2)^{\zeta 2}\Delta x_l(t - \tau_3)] - \mathrm{E}[\Delta x_i(t)\Delta x_j(t - \tau_1)^{\zeta 1}]\ \mathrm{E}[\Delta x_k(t - \tau_2)^{\zeta 2}\Delta x_l(t - \tau_3)]$$

$$- \mathrm{E}[\Delta x_i(t)\Delta x_k(t - \tau_2)^{\zeta 2}]\ \mathrm{E}[\Delta x_j(t - \tau_1)^{\zeta 1}\Delta x_l(t - \tau_3)] - \mathrm{E}[\Delta x_i(t)\Delta x_l(t - \tau_3)]\ \mathrm{E}[\Delta x_j(t - \tau_1)^{\zeta 1}\Delta x_k(t - \tau_2)^{\zeta 2}]$$

$$= \mathrm{E}[x_i(t)x_j(t - \tau_1)^{\zeta 1}x_k(t - \tau_2)^{\zeta 2}x_l(t - \tau_3)] - e_{xi}(t)\ \mathrm{E}[x_j(t - \tau_1)^{\zeta 1}x_k(t - \tau_2)^{\zeta 2}x_l(t - \tau_3)]$$

$$- e_{xj}(t - \tau_1)^{\zeta 1}\ \mathrm{E}[x_i(t)x_k(t - \tau_2)^{\zeta 2}x_l(t - \tau_3)] - e_{xk}(t - \tau_2)^{\zeta 2}\mathrm{E}[x_i(t)x_j(t - \tau_1)^{\zeta 1}x_l(t - \tau_3)]$$

$$- e_{xl}(t - \tau_3)\ \mathrm{E}[x_i(t)x_j(t - \tau_1)^{\zeta 1}x_k(t - \tau_2)^{\zeta 2}] - \mathrm{E}[x_i(t)x_j(t - \tau_1)^{\zeta 1}]\ \mathrm{E}[x_k(t - \tau_2)^{\zeta 2}x_l(t - \tau_3)]$$

$$- \mathrm{E}[x_i(t)x_k(t - \tau_2)^{\zeta 2}]\ \mathrm{E}[x_j(t - \tau_1)^{\zeta 1}x_l(t - \tau_3)] - \mathrm{E}[x_i(t)x_l(t - \tau_3)]\ \mathrm{E}[x_j(t - \tau_1)^{\zeta 1}x_k(t - \tau_2)^{\zeta 2}]$$

$$+ 2\,e_{xi}(t)\,e_{xj}(t - \tau_1)^{\zeta 1}\mathrm{E}[x_k(t - \tau_2)^{\zeta 2}x_l(t - \tau_3)] + 2\,e_{xi}(t)\,e_{xk}(t - \tau_2)^{\zeta 2}\mathrm{E}[x_j(t - \tau_1)^{\zeta 1}x_l(t - \tau_3)]$$

$$+ 2\,e_{xi}(t)\,e_{xl}(t - \tau_3)\,\mathrm{E}[x_j(t - \tau_1)^{\zeta 1}x_k(t - \tau_2)^{\zeta 2}] + 2\,e_{xk}(t - \tau_2)^{\zeta 2}\,e_{xj}(t - \tau_1)^{\zeta 1}\mathrm{E}[x_i(t)\,x_l(t - \tau_3)]$$

$$+ 2\,e_{xl}(t - \tau_3)\,e_{xj}(t - \tau_1)^{\zeta 1}\mathrm{E}[x_k(t - \tau_2)^{\zeta 2}x_i(t)] + 2\,e_{xk}(t - \tau_2)^{\zeta 2}\,e_{xl}(t - \tau_3)\,\mathrm{E}[x_i(t)\,x_j(t - \tau_1)^{\zeta 1}]$$

$$- 6\,e_{xi}(t)\,e_{xj}(t - \tau_1)^{\zeta 1}e_{xk}(t - \tau_2)^{\zeta 2}\,e_{xl}(t - \tau_3) \tag{39}$$

où $\zeta \overset{\Delta}{=} (\zeta_1,\ \zeta_2)$ et $(\zeta_1,\ \zeta_2) = (1, 1)$, $(-1, 1)$ ou $(-1, -1)$. En supposant que le terme $Q_{x\zeta}(t,\ \tau_1,\ \tau_2,\ \tau_3)[i, j, k, l]$ est l'élément $[N(i - 1) + j,\ N(k - 1) + l]$ de la matrice $Q_{x\zeta}(t,\ \tau_1,\ \tau_2,\ \tau_3)$, dite de quadricovariance, de dimension $(N^2 \times N^2)$, on obtient une expression de celle-ci donnée par

$$Q_{x\zeta}(t,\ \tau_1,\ \tau_2,\ \tau_3) = (A \otimes A^{\zeta 1})\,Q_{mc\zeta}(t,\ \tau_1,\ \tau_2,\ \tau_3)\,(A^{\zeta 2} \otimes A)^{\mathrm{T}}$$

$$= \sum_{i,\,j,\,k\,=\,1}^{P} Q_{mc\zeta}[i, j, k, l](t,\ \tau_1,\ \tau_2,\ \tau_3)\ [a_i \otimes a_j^{\zeta 1}][a_k^{\zeta 2} \otimes a_l]^{\mathrm{T}} \tag{40}$$

où $Q_{mc\zeta}(t,\ \tau_1,\ \tau_2,\ \tau_3)$ est la quadricovariance du vecteur $m_c(t)$ dont les éléments sont les $Q_{mc\zeta}[i, j, k, l](t,\ \tau_1,\ \tau_2,\ \tau_3) \overset{\Delta}{=}$ $\mathrm{Cum}(m_{ic}(t),\ m_{jc}(t - \tau_1)^{\zeta 1},\ m_{kc}(t - \tau_2)^{\zeta 2},\ m_{lc}(t - \tau_3))$.

Pour des sources cyclostationnaires, les matrices de quadricovariance, $Q_{mc\zeta}(t,\ \tau_1,\ \tau_2,\ \tau_3)$ et $Q_{x\zeta}(t,\ \tau_1,\ \tau_2,\ \tau_3)$, sont des fonctions (quasi-) ou poly-périodiques du temps t, admettant une décomposition en série de Fourier et on obtient

$$Q_{x\zeta}(t, \tau_1, \tau_2, \tau_3) \ = \ \sum_{\beta_{x\zeta}\in\Gamma_x^{[1,\,\zeta_1,\,\zeta_2,\,1]}} Q_{x\zeta}^{\beta_{x\zeta}}(\tau_1, \tau_2, \tau_3) \ e^{j2\pi\beta_{x\zeta}t} \qquad\qquad (41)$$

où $\Gamma_x^{[1,\,\zeta_1,\,\zeta_2,\,1]} = \{\beta_{x\zeta}\}$ est l'ensemble des fréquences cycliques $\beta_{x\zeta}$ de $Q_{x\zeta}(t, \tau_1, \tau_2, \tau_3)$ et $Q_{x\zeta}^{\beta_{x\zeta}}(\tau_1, \tau_2, \tau_3)$ une matrice de quadricovariance cyclique de $x(t)$, definie respectivement par

$$Q_{x\zeta}^{\beta_{x\zeta}}(\tau_1, \tau_2, \tau_3) \ = \ < Q_{x\zeta}(t, \tau_1, \tau_2, \tau_3) \ e^{-j2\pi\beta_{x\zeta}t} >_c \ = \ (A \otimes A^{\zeta_1})Q_{mc\zeta}^{\beta_{x\zeta}}(\tau_1, \tau_2, \tau_3)$$
$$(A^{\zeta_2} \otimes A)^{\mathrm{T}} \qquad\qquad (42)$$

En particulier, la quadricovariance cyclique pour la fréquence cyclique zéro correspond à la moyenne temporelle en $t$, $Q_{x\zeta}(\tau_1, \tau_2, \tau_3)$, de $Q_{x\zeta}(t, \tau_1, \tau_2, \tau_3)$, laquelle s'écrit,

$$Q_{x\zeta}(\tau_1, \tau_2, \tau_3) \ \triangleq \ < Q_{x\zeta}(t, \tau_1, \tau_2, \tau_3) >_c \ = \ (A \otimes A^{\zeta_1}) \, Q_{mc\zeta}(\tau_1, \tau_2, \tau_3) \, (A^{\zeta_2} \otimes A)^{\mathrm{T}}$$
$$(42\text{bis})$$

où $Q_{mc\zeta}(\tau_1, \tau_2, \tau_3)$ est la moyenne temporelle en $t$ de $Q_{mc\zeta}(t, \tau_1, \tau_2, \tau_3)$.

**Nouvel estimateur des cumulants d'ordre 4 des observations**

On déduit de (39) et des décompositions en série de Fourier des statistiques apparaissant dans cette expression, l'expression de l'élément [$i$, $j$, $k$, $l$] de la matrice de quadricovariance cyclique $Q_{mc\zeta}(\tau_1, \tau_2, \tau_3)$ dans le cas général d'observations non centrées, donnée par

$$Q_{x\zeta}^{\beta}(\tau_1, \tau_2, \tau_3)[i, j, k, l] \ = \ < Q_{x\zeta}(t, \tau_1, \tau_2, \tau_3)[i, j, k, l] \ e^{-j2\pi\beta t} >_c \ =$$

$$M_{x\zeta}^{\beta}(\tau_1, \tau_2, \tau_3)[i, j, k, l] =$$

$$\sum_{\gamma \in \Gamma_x^1} \{ e_x^{\gamma}[i] \ T_{x\zeta}^{\beta-\gamma}(\tau_1 - \tau_3, \tau_2 - \tau_3)[l, j, k] \ e^{-j2\pi(\beta-\gamma)\tau_3} + e_x^{\gamma}[j]^{\zeta 1} \ T_{x\zeta 2}^{\beta-\gamma\zeta 1}(\tau_2, \tau_3)[i, k, l]$$
$$e^{-j2\pi\gamma\zeta_1\tau_1}$$

$$+ e_x^{\gamma}[k]^{\zeta 2} \ T_{x\zeta 1}^{\beta-\gamma\zeta 2}(\tau_1, \tau_3)[i, j, l] \ e^{-j2\pi\gamma\zeta_2\tau_2} + e_x^{\gamma}[l] \ T_{x\zeta}^{\beta-\gamma}(\tau_1, \tau_2)[i\, j, k] \ e^{-j2\pi\gamma\tau_3}\}$$

$$- \sum_{\alpha \in \Gamma_x^{[1,\varepsilon 1]}} R_{x\zeta 1}^{\alpha}(\tau_1)[i, j] \ R_{x\zeta 2}^{\zeta 2(\beta-\alpha)}(\tau_3-\tau_2)[k, l]^{\zeta 2} \ e^{j2\pi(\alpha-\beta)\tau_2}$$

$$- \sum_{\gamma \in \Gamma_x^{[1,\varepsilon 2]}} R_{x\zeta 2}^{\gamma}(\tau_2)[i, k] \ R_{x\zeta 1}^{\zeta 1(\beta-\gamma)}(\tau_3-\tau_1)[j, l]^{\zeta 1} \ e^{j2\pi(\gamma-\beta)\tau_1}$$

$$- \sum_{\omega \in \Gamma_x^{[1,1]}} R_{x1}^{\omega}(\tau_3)[i, l] \ R_{x\zeta 12}^{\zeta 1(\beta-\omega)}(\tau_2-\tau_1)[j, k]^{\zeta 1} \ e^{j2\pi(\omega-\beta)\tau_1}$$

$$+ 2 \sum_{\gamma \in \Gamma_x^1} \sum_{\omega \in \Gamma_x^1} \{ e_x^{\gamma}[i] \ e_x^{\omega}[j]^{\zeta 1} \ R_{x\zeta 2}^{\beta-\gamma-\omega\zeta 1}(\tau_2-\tau_3)[l, k] \ e^{j2\pi\omega\zeta_1(\tau_3-\tau_1)} \ e^{j2\pi(\gamma-\beta)\tau_3}$$

$$+ e_x^{\gamma}[i] \ e_x^{\omega}[k]^{\zeta 2} \ R_{x\zeta 1}^{\beta-\gamma-\omega\zeta 2}(\tau_1-\tau_3)[l, j] \ e^{j2\pi\omega\zeta_2(\tau_3-\tau_2)} \ e^{j2\pi(\gamma-\beta)\tau_3}$$

$$+ e_x^{\gamma}[i] \ e_x^{\omega}[l] \ R_{x\zeta 12}^{\zeta 1(\beta-\omega-\gamma)}(\tau_2-\tau_1)[j, k]^{\zeta 1} \ e^{j2\pi\omega(\tau_1-\tau_3)} \ e^{-j2\pi\beta\tau_1}$$

$$+ e_x^{\gamma}[k]^{\zeta 2} \ e_x^{\omega}[j]^{\zeta 1} R_{x1}^{\beta-\gamma\zeta 2-\omega\zeta 1}(\tau_3)[i, l] \ e^{-j2\pi\gamma\tau_2\zeta 2} \ e^{-j2\pi\omega\tau_1\zeta 1}$$

$$+ e_x^{\gamma}[l] \ e_x^{\omega}[j]^{\zeta 1} \ R_{x\zeta 2}^{\beta-\gamma-\omega\zeta 1}(\tau_2)[i, k] \ e^{-j2\pi\omega\tau_1\zeta 1} \ e^{-j2\pi\gamma\tau_3}$$

$$+ e_x^{\gamma}[l] \ e_x^{\omega}[k]^{\zeta 2} \ R_{x\zeta 1}^{\beta-\gamma-\omega\zeta 2}(\tau_1)[i, j] \ e^{-j2\pi\omega\tau_2\zeta 2} \ e^{-j2\pi\gamma\tau_3} \}$$

$$- 6 \sum_{\gamma \in \Gamma_x^1} \sum_{\omega \in \Gamma_x^1} \sum_{\delta \in \Gamma_x^1} e_x^{\gamma}[i] \ e_x^{\omega}[j]^{\zeta 1} e_x^{\delta}[k]^{\zeta 2} \ e_x^{\beta-\gamma-\omega\zeta 1-\delta\zeta 2}[l] \ e^{j2\pi\omega\zeta_1(\tau_3-\tau_1)}$$
$$e^{j2\pi\delta\zeta_2(\tau_3-\tau_2)} \ e^{j2\pi\tau_3(\gamma-\beta)} \qquad (43)$$

où

où $T_{x\zeta}(t, \tau_1, \tau_2)[i, j, k] \triangleq E[x_i(t) \ x_j(t - \tau_1)^{\zeta 1} \ x_k(t - \tau_2)^{\zeta 2}]$, $T_{x\zeta}^{\beta}(\tau_1, \tau_2)[i, j, k] \triangleq \ < T_{x\zeta}(t, \tau_1, \tau_2)[i, j, k] \ e^{-j2\pi\beta t} >_c$, $T_{x\varepsilon}(t, \tau_1, \tau_2)[i, j, k] \triangleq \ E[x_i(t) \ x_j(t - \tau_1)^{\varepsilon} \ x_k(t - \tau_2)]$, $T_{x\varepsilon}^{\beta}(\tau_1, \tau_2)[i, j, k] = \ < T_{x\varepsilon}(t, \tau_1, \tau_2)[i, j, k] \ e^{-j2\pi\beta t} >_c$

En particulier, la matrice de quadricovariance cyclique exploitée par les séparateurs de la famille F3 correspond à la matrice $Q_{x\zeta}^{\beta}(\tau_1, \tau_2, \tau_3)$ pour $\beta = 0 \zeta = (-1, -1)$ et $(\tau_1, \tau_2, \tau_3) = (0, 0, 0)$ et son élément $Q_{x\zeta}^{\beta}(\tau_1, \tau_2, \tau_3)[i,j,k,l]$, noté $Q_x[i,j,k,l]$, s'écrit

$$Q_x[i, j, k, l] \overset{\Delta}{=} \; <Q_x(t, 0, 0, 0)[i, j, k, l]>_c = M_x^0[i, j, k, l] \; -$$

$$\sum_{\gamma \in \Gamma_x} \{ e_x^{\gamma}[i] \, T_x^{\gamma}[j, l, k]^* + e_x^{\gamma}[l] \, T_x^{\gamma}[j, i, k]^* + e_x^{\gamma}[j]^* \, T_x^{\gamma}[i, k, l] + e_x^{\gamma}[k]^* \, T_x^{\gamma}[i, j, l]\}$$

$$- \sum_{\alpha \in \Gamma_x^{[1,-1]}} \{R_x^{\alpha}[i, j] \, R_x^{-\alpha}[l, k] + R_x^{\alpha}[i, k] \, R_x^{-\alpha}[l, j]\} - \sum_{\omega \in \Gamma_x^{[1,1]}} C_x^{\omega}[i, l] \, C_x^{\omega}[j, k]^*$$

$$+ 2 \sum_{\gamma \in \Gamma_x^1} \sum_{\omega \in \Gamma_x^1} \{ e_x^{\gamma}[i] \, e_x^{\omega}[j]^* \, R_x^{\omega-\gamma}[l, k] + e_x^{\gamma}[i] \, e_x^{\omega}[k]^* \, R_x^{\omega-\gamma}[l, j] + e_x^{\gamma}[i] \, e_x^{\omega}[l] \, C_x^{\omega+\gamma}[k, j]^*$$

$$+ e_x^{\gamma}[k]^* \, e_x^{\omega}[j]^* \, C_x^{\omega+\gamma}[i, l] + e_x^{\gamma}[l] \, e_x^{\omega}[j]^* \, R_x^{\omega-\gamma}[i, k] + e_x^{\gamma}[l] \, e_x^{\omega}[k]^* \, R_x^{\omega-\gamma}[i, j] \}$$

$$- 6 \sum_{\gamma \in \Gamma_x^1} \sum_{\omega \in \Gamma_x^1} \sum_{\delta \in \Gamma_x^1} e_x^{\gamma}[i] \, e_x^{\omega}[j]^* \, e_x^{\delta}[k]^* \, e_x^{\delta+\omega-\gamma}[l] \tag{44}$$

où

$$M_x^0[i, j, k, l] \overset{\Delta}{=} \; <E[x_i(t) \, x_j(t)^* \, x_k(t)^* \, x_l(t)]>_c, \quad T_x^{\beta}[i, j, k] \overset{\Delta}{=} \; <E[x_i(t) \, x_j(t)^* \, x_k(t)] \; e^{-j2\pi\beta t}$$

$$>_c, \quad R_x^{\alpha}[i, j] \overset{\Delta}{=} \; <E[x_i(t) \, x_j(t)^*] \; e^{-j2\pi\alpha t} >_c, \quad C_x^{\alpha}[i, j] \overset{\Delta}{=} \; <E[x_i(t) \, x_j(t)] \; e^{-j2\pi\alpha t} >_c.$$

Ainsi, l'estimation de la matrice de quadricovariance cyclique $Q_{x\zeta}^{\beta}(l_1T_e, l_2T_e, l_3T_e)[i,j,k,l]$ s'effectue à partir de l'estimateur $\hat{Q}_{x\zeta}^{\beta}(l_1T_e, l_2T_e, l_3T_e)[i, j, k, l](K)$ défini par

$$\hat{Q}_{x\zeta}^{\beta}(l_1T_e, l_2T_e, l_3T_e)[i, j, k, l](K) = \hat{M}_{x\zeta}^{\beta}(l_1T_e, l_2T_e, l_3T_e)[i, j, k, l](K)$$

$$- \sum_{\gamma \in \Gamma_x^1} \{ \hat{e}_x^\gamma[i](K) \ \hat{T}_{x\zeta}^{\beta-\gamma}((l_1 - l_3)T_e, (l_2 - l_3)T_e)[l, j, k](K) \ e^{-j2\pi(\beta-\gamma)l_3 T_e}$$

$$+ \hat{e}_x^\gamma[j](K)^{\zeta 1} \ \hat{T}_{x\zeta 2}^{\beta-\gamma\zeta 1}(l_2 T_e, l_3 T_e)[i, k, l](K) \ e^{-j2\pi\gamma\zeta 1 l_1 T_e}$$

$$+ \hat{e}_x^\gamma[k](K)^{\zeta 2} \ \hat{T}_{x\zeta 1}^{\beta-\gamma\zeta 2}(l_1 T_e, l_3 T_e)[i, j, l](K) \ e^{-j2\pi\gamma\zeta 2 l_2 T_e}$$

$$+ \hat{e}_x^\gamma[l](K) \ \hat{T}_{x\zeta}^{\beta-\gamma}(l_1 T_e, l_2 T_e)[i\,j, k](K) \ e^{-j2\pi\gamma l_3 T_e} \}$$

$$- \sum_{\alpha \in \Gamma_x^{[1,\varepsilon 1]}} \hat{R}_{x\zeta 1}^\alpha(l_1 T_e)[i, j](K) \ \hat{R}_{x\zeta 2}^{\zeta 2(\beta-\alpha)}((l_3 - l_2)T_e)[k, l](K)^{\zeta 2} \ e^{j2\pi(\alpha-\beta) \, l_2 T_e}$$

$$- \sum_{\gamma \in \Gamma_x^{[1,\varepsilon 2]}} \hat{R}_{x\zeta 2}^\gamma(l_2 T_e)[i, k](K) \ \hat{R}_{x\zeta 1}^{\zeta 1(\beta-\gamma)}((l_3 - l_1)T_e)[j, l](K)^{\zeta 1} \ e^{j2\pi(\gamma-\beta) \, l_1 T_e}$$

$$- \sum_{\omega \in \Gamma_x^{[1,1]}} \hat{R}_{x1}^\omega(l_3 T_e)[i, l](K) \ \hat{R}_{x\zeta 12}^{\zeta 1(\beta-\omega)}((l_2 - l_1)T_e)[j, k](K)^{\zeta 1} \ e^{j2\pi(\omega-\beta) \, l_1 T_e}$$

$$+ \ 2 \sum_{\gamma \in \Gamma_x^1} \sum_{\omega \in \Gamma_x^1} \{ \ \hat{e}_x^\gamma[i](K) \ \hat{e}_x^\omega[j](K)^{\zeta 1} \hat{R}_{x\zeta 2}^{\beta-\gamma-\omega\zeta 1}((l_2 - l_3)T_e)[l, k](K)$$
$$e^{j2\pi\omega\zeta 1(l_3 - l_1)T_e} \, e^{j2\pi(\gamma-\beta) \, l_3 T_e}$$

$$+ \hat{e}_x^\gamma[i](K) \ \hat{e}_x^\omega[k](K)^{\zeta 2} \ \hat{R}_{x\zeta 1}^{\beta-\gamma-\omega\zeta 2}((l_1 - l_3)T_e)[l, j](K) \ e^{j2\pi\omega\zeta 2(l_3 - l_2)T_e} \ e^{j2\pi(\gamma-\beta) \, l_3 T_e}$$

$$+ \hat{e}_x^\gamma[i](K) \ \hat{e}_x^\omega[l](K) \ \hat{R}_{x\zeta 12}^{\zeta 1(\beta-\omega-\gamma)}((l_2 - l_1)T_e)[j, k](K)^{\zeta 1} \ e^{j2\pi\omega(l_1 - l_3)T_e} \ e^{-j2\pi\beta l_1 T_e}$$

$$+ \hat{e}_x^\gamma[k](K)^{\zeta 2} \ \hat{e}_x^\omega[j](K)^{\zeta 1} \hat{R}_{x1}^{\beta-\gamma\zeta 2-\omega\zeta 1}(l_3 T_e)[i, l](K) \ e^{-j2\pi\gamma l_2 T_e \zeta 2} \ e^{-j2\pi\omega l_1 T_e \zeta 1}$$

$$+ \hat{e}_x^\gamma[l](K) \ \hat{e}_x^\omega[j](K)^{\zeta 1} \ \hat{R}_{x\zeta 2}^{\beta-\gamma-\omega\zeta 1}(l_2 T_e)[i, k](K) \ e^{-j2\pi\omega l_1 T_e \zeta 1} \ e^{-j2\pi\gamma l_3 T_e}$$

$$+ \hat{e}_x^\gamma[l](K) \ \hat{e}_x^\omega[k](K)^{\zeta 2} \ \hat{R}_{x\zeta 1}^{\beta-\gamma-\omega\zeta 2}(l_1 T_e)[i, j](K) \ e^{-j2\pi\omega l_2 T_e \zeta 2} \ e^{-j2\pi\gamma \, l_3 T_e} \}$$

$$- 6 \sum_{\gamma \in \Gamma_x^1} \sum_{\omega \in \Gamma_x^1} \sum_{\delta \in \Gamma_x^1} \hat{e}_x^\gamma[i](K) \ \hat{e}_x^\omega[j](K)^{\zeta 1} \hat{e}_x^\delta[k](K)^{\zeta 2} \ \hat{e}_x^{\beta-\gamma-\omega\zeta 1-\delta\zeta 2}[l](K) \ e^{j2\pi\omega\zeta 1(l_3 - l_1)T_e}$$
$$e^{j2\pi\delta\zeta 2(l_3 - l_2)T_e} \ e^{j2\pi l_3 T_e(\gamma-\beta)} \hspace{3cm} (45)$$

où $\hat{M}_{x\zeta}^\beta((l_1 T_e, l_2 T_e, l_3 T_e)[i, j, k, l](K)$ est défini par l'expression

$$\hat{M}^{\beta}_{x\zeta}(l_1T_e, l_2T_e, l_3T_e)[i, j, k, l](K) = \frac{1}{K} \sum_{m=1}^{K} x_i(m)\, x_j(m - l_1)^{\zeta_1} x_k(m - l_2)^{\zeta_2} x_l(m - l_3)$$

$$e^{-j2\pi\beta\, mT_e} \tag{46}$$

donnée dans la référence [5] et où $\hat{e}^{\gamma}_x[i](K)$, $\hat{R}^{\alpha}_{x\varepsilon}(lT_e)[i, j](K)$, $\hat{T}^{\alpha}_{x\varepsilon}((l_1T_e, l_2T_e)[i, j, l](K)$ et $\hat{T}\hat{T}^{\alpha}_{x\zeta}((l_1T_e, l_2T_e)[i, j, l](K)$ sont définis par respectivement (47), (48), (49) et (50).

$$\hat{e}^{\gamma}_x[i](K) \triangleq \frac{1}{K} \sum_{k=1}^{K} x_i(k)\, e^{-j2\pi\gamma\, kT_e} \tag{47}$$

$$\hat{R}^{\alpha}_{x\varepsilon}(lT_e)[i, j](K) \triangleq \frac{1}{K} \sum_{k=1}^{K} x_i(k)\, x_j(k - l)^{\varepsilon}\, e^{-j2\pi\alpha\, kT_e} \tag{48}$$

$$\hat{T}^{\alpha}_{x\varepsilon}(l_1T_e, l_2T_e)[i, j, l](K) \triangleq \frac{1}{K} \sum_{k=1}^{K} x_i(k)\, x_j(k - l_1)^{\varepsilon}\, x_l(k - l_2)\, e^{-j2\pi\alpha\, kT_e} \tag{49}$$

$$\hat{T}^{\alpha}_{x\zeta}(l_1T_e, l_2T_e)[i, j, l](K) \triangleq \frac{1}{K} \sum_{k=1}^{K} x_i(k)\, x_j(k - l_1)^{\zeta_1} x_l(k - l_2)^{\zeta_2}\, e^{-j2\pi\alpha\, kT_e} \tag{50}$$

Dans ces conditions, sous l'hypothèse d'observations cyclostationnaires et cycloergodiques, centrées ou non, l'estimateur (45) est un estimateur asymptotiquement non biaisé et consistant de l'élément $Q^{\beta}_{x\zeta}((l_1T_e, l_2T_e, l_3T_e)[i, j, k, l]$. En particulier, les séparateurs F3 doivent exploiter l'estimateur (45) pour $\beta = 0$, $\zeta = (-1, -1)$ et $l_1 = l_2 = l_3 = 0$, noté $\hat{Q}_x[i, j, k, l](K)$ et défini par

$$\hat{Q}_x[i, j, k, l](K) \triangleq \hat{M}^0_x[i, j, k, l](K) -$$

$$\sum_{\gamma \in \Gamma x} \{\hat{e}^{\gamma}_x[i](K)\, \hat{T}^{\gamma}_x[j, l, k](K)^* + \hat{e}^{\gamma}_x[l](K)\, \hat{T}^{\gamma}_x[j, i, k](K)^* + \hat{e}^{\gamma}_x[j](K)^*\, \hat{T}^{\gamma}_x[i, k, l](K)$$

$$+ \hat{e}_x^\gamma[k](K)^* \, \hat{T}_x^\gamma[i, j, l](K) \} \;-\; \sum_{\omega \in \Gamma_x^{[1,1]}} \hat{C}_x^\omega[i, l](K) \, \hat{C}_x^\omega[j, k](K)^*$$

$$- \sum_{\alpha \in \Gamma_x^{[1,-1]}} \{ \hat{R}_x^\alpha[i, j](K) \, \hat{R}_x^{-\alpha}[l, k](K) \;+\; \hat{R}_x^\alpha[i, k](K) \, \hat{R}_x^{-\alpha}[l, j](K) \}$$

$$+ 2 \sum_{\gamma \in \Gamma_x^1} \sum_{\omega \in \Gamma_x^1} \{ \hat{e}_x^\gamma[i](K) \, \hat{e}_x^\omega[j](K)^* \, \hat{R}_x^{\omega-\gamma}[l, k](K) \;+\; \hat{e}_x^\gamma[i](K) \, \hat{e}_x^\omega[k](K)^* \, \hat{R}_x^{\omega-\gamma}[l, j](K)$$

$$+ \hat{e}_x^\gamma[i](K) \, \hat{e}_x^\omega[l](K) \, \hat{C}_x^{\omega+\gamma}[k, j](K)^* \;+\; \hat{e}_x^\gamma[k](K)^* \, \hat{e}_x^\omega[j](K)^* \, \hat{C}_x^{\omega+\gamma}[i, l](K)$$

$$+ \hat{e}_x^\gamma[l](K) \, \hat{e}_x^\omega[j](K)^* \, \hat{R}_x^{\omega-\gamma}[i, k](K) \;+\; \hat{e}_x^\gamma[l](K) \, \hat{e}_x^\omega[k](K)^* \, \hat{R}_x^{\omega-\gamma}[i, j](K) \}$$

$$- 6 \sum_{\gamma \in \Gamma_x^1} \sum_{\omega \in \Gamma_x^1} \sum_{\delta \in \Gamma_x^1} \hat{e}_x^\gamma[i](K) \, \hat{e}_x^\omega[j](K)^* \, \hat{e}_x^\delta[k](K)^* \, \hat{e}_x^{\delta+\omega-\gamma}[l](K) \qquad (51)$$

où $\hat{M}^0_x[i, j, k, l](K)$ est défini par (46) (définie précédemment) avec $\beta = 0$, $l_1 = l_2 = l_3 = 0$, $\zeta = (-1, -1)$, $\hat{T}_x^\gamma[i, j, l](K)$ est défini par (49) avec $\alpha = \gamma$, $l_1 = l_2 = 0$, $\varepsilon = -1$, $\hat{R}_x^\alpha[i, j]$ et $\hat{C}_x^\alpha[i, j]$ sont définis par (29) avec $l = 0$ et respectivement $\varepsilon = -1$ et $\varepsilon = +1$.

Comme il a été indiqué précédemment et comme le laissent apparaîtrent les estimateurs précédents, le procédé selon l'invention comporte aussi une étape où l'estimateur à l'ordre 2 ou à l'ordre 4 est corrigé en utilisant les fréquences cycliques, lesquelles doivent être détectées a priori. L'exemple détaillé qui suit est donné dans le cas d'une détection des fréquences cycliques à l'ordre 1.

**Détecteur des fréquences cycliques à l'ordre 1**

La détection des fréquences cycliques à l'ordre 1 des observations $\gamma$ par un détecteur de fréquences cycliques et la constitution d'une estimée, $\hat{\Gamma}^1_x$, de l'ensemble, $\hat{\Gamma}^1_x$, des fréquences cycliques $\gamma$ sont réalisées par exemple en calculant le critère normalisé suivant :

$$V(\alpha) = \frac{\dfrac{1}{N} \displaystyle\sum_{n=1}^{N} \left| \hat{e}_x^\alpha[n][K] \right|^2}{\hat{\gamma}_x} \qquad (52)$$

Avec

$$\hat{\gamma}_x = \frac{1}{N} \frac{1}{K} \sum_{k=1}^{K} |x_n(k)|^2 \quad \text{et} \quad \hat{e}_x^\gamma[n](K) = \frac{1}{K} \sum_{k=1}^{K} x_n(k) \exp(-j2\pi\gamma k T_e)$$

On rappelle que $x_n(t)$ est le signal reçu sur le $n^{ième}$ capteur. L'estimateur $\hat{e}_x^\gamma[n](K)$ peut être calculé de façon optimisé pour K fréquences cycliques $\alpha_k = k/(K\, T_e)$ $(0 \le k \le K-1)$ par une FFT (Fast Fourier Transformation) sur les échantillons temporel $x_n((k+k_0)T_e)$ tel que $0 \le k \le K-1$. Le critère $V(\alpha)$ est normalisé entre 0 et 1 car $\hat{\gamma}_x$ représente la moyenne temporelle de la puissance moyenne du signal sur l'ensemble des capteurs. Sachant que dans l'hypothèse où $x_n(kT_e)$ est un bruit gaussien le critère $V(\alpha)$ suit de façon approché une loi du chi-2 on en déduit le test de détection suivant :

- La fréquence $\alpha$ est une fréquence $\gamma_n$ cyclique de $E[x(t)]$ : $V(\alpha) > =\mu(pf\alpha)$

- La fréquence $\alpha$ n'est pas une fréquence cyclique : $V(\alpha) < \mu(pf\alpha)$

où $\mu(pf\alpha)$ est un seuil fonction de la Probabilité de fausse alarme $pf\alpha$

La suite de la description donne plusieurs variantes de mise en oeuvre du procédé pour la séparation de sources statistiquement indépendantes, stationnaires ou cyclostationnaires. Les séparateurs associés sont appelés respectivement F'1, F'2, F'3 et F'4.

### Séparateurs à l'ordre 2 proposés

*Séparateurs F1'*

Les séparateurs de la famille F1' sont des séparateurs autodidactes à l'ordre 2 mettant en oeuvre les opérations suivantes :

Etape de blanchiment

- Détection des fréquences cycliques à l'ordre 1 des observations $\gamma$ par un détecteur de fréquences cycliques quelconque et constitution d'une estimée, $\hat{\Gamma}^1_{x'}$, de l'ensemble, $\Gamma^1_{x'}$, des fréquences cycliques $\gamma$.

- Estimation de la matrice $R_{\Delta x}(0)$ par $\hat{R}_{\Delta x}(0)(K)$ définie par (33) et (32) pour $l = 0$ à partir d'un nombre d'échantillons $K$ donné

- Détection du nombre de sources $P$ à partir de la décomposition en éléments propres de $\hat{R}_{\Delta x}(0)(K)$. (Toutes les sources non déterministes sont détectées).

- Calcul de la matrice de blanchiment des observations, $\hat{T}$, où $\hat{T} \triangleq \hat{\Lambda}_s^{-1/2} \hat{U}_s^\dagger$, de dimension $(P \times N)$, où $\hat{\Lambda}_s$ est la matrice diagonale $(P \times P)$ des $P$ plus grandes valeurs propres de $\hat{R}_{\Delta x}(0)(K) - \lambda_{min} I$, $\lambda_{min}$ est la valeur propre minimale de $\hat{R}_{\Delta x}(0)(K)$ et $\hat{U}_s$ est la matrice des vecteurs propres associés. On note $z(t) \triangleq \hat{T}x(t)$. (Les vecteurs directeurs des sources non déterministes sont orthonormalisés).

Etape d'identification

- Choix de Q valeurs de retards non nuls, $l_q$, $(1 \leq q \leq Q)$.

- Pour chaque valeur, $l_q$, du retard, estimation de la matrice de cumulants d'ordre 2 moyennés des observations, $R_{\Delta x}(l_q T_e)$, par $\hat{R}_{\Delta x}(l_q T_e)(K)$ définie par $\triangleq$ ), (29) et (32)

- Calcul des matrices $\hat{R}_{\Delta z}(l_q T_e)(K) \triangleq \hat{T} \hat{R}_{\Delta x}(l_q T_e)(K) \hat{T}^\dagger$ et identification autodidacte des vecteurs directeurs des sources blanchis par maximisation, par rapport à $U \triangleq (u_1, u_2, ..., u_P)$, du critère

$$CI(U) \triangleq \sum_{q=1}^{Q} \sum_{l=1}^{P} \left| u_l^\dagger R_z(\tau_q) u_l \right|^2$$

donné dans la référence [7] où $R_z(\tau_q)$ est remplacée par $\hat{R}_{\Delta z}(l_q T_e)(K)$. La matrice $U$ solution est notée $\hat{A}_{nd}$' et contient une estimée des vecteurs directeurs blanchis des sources non déterministes

Filtre

- Calcul d'une estimée de la matrice des vecteurs directeurs des sources non déterministes $\hat{A}_{nd} = \hat{U}_s \hat{\Lambda}_s^{1/2} \hat{A}_{nd}'$
- Extraction des sources non déterministes par un filtrage spatial quelconque des observations construit à partir de $\hat{A}_{nd}$.

Traitement des sources déterministes

- Construction du projecteur orthogonal sur l'espace orthogonal aux colonnes de $\hat{A}_{nd}$ : Proj = I - $\hat{A}_{nd}[\hat{A}_{nd}^\dagger \hat{A}_{nd}]^{-1}\hat{A}_{nd}^\dagger$

- Mise en oeuvre de l'algorithme SOBI [3] à partir des observations $\nu(t) \triangleq$ Proj $x(t)$ pour identifier les vecteurs directeurs des sources déterministes et extraire celles-ci.

*Séparateurs F2'*

Les séparateurs de la famille F2' sont des séparateurs autodidactes à l'ordre 2 mettant en oeuvre les opérations suivantes :

Etape de blanchiment

- Détection des fréquences cycliques à l'ordre 1 des observations $\gamma$ par un détecteur de fréquences cycliques quelconque et constitution d'une estimée, $\hat{\Gamma}_x^1$, de l'ensemble, $\Gamma_x^1$, des fréquences cycliques $\gamma$.

- Estimation de la matrice $R_{\Delta x}(0)$ par $\hat{R}_{\Delta x}(0)(K)$ définie par (33) et (32) pour $l = 0$ à partir d'un nombre d'échantillons $K$ donné

- Détection du nombre de sources $P$ à partir de la décomposition en éléments propres de $\hat{R}_{\Delta x}(0)(K)$. (Toutes les sources non déterministes sont détectées).

Etape d'identification

- Calcul de la matrice de blanchiment des observations, $\hat{T}$, où $\hat{T} \triangleq \hat{\Lambda}_s^{-1/2} \hat{U}_s^\dagger$, de dimension $(P \times N)$, où $\hat{\Lambda}_s$ est la matrice diagonale $(P \times P)$ des $P$ plus grandes valeurs propres de $\hat{R}_{\Delta x}(0)(K)$ - $\lambda_{min}$ I, $\lambda_{min}$ est la valeur propre minimale de $\hat{R}_{\Delta x}(0)(K)$ et $\hat{U}_s$ est la matrice des vecteurs propres associés. On note $z(t) \triangleq \hat{T}x(t)$. (Les vecteurs directeurs des sources non déterministes sont orthonormalisés).

- Détection des fréquences cycliques à l'ordre 2 des observations [9], $\alpha\varepsilon$, pour $\varepsilon = -1$ et $\varepsilon = +1$ par un détecteur de fréquences cycliques quelconque et constitution des estimées, $\hat{\Gamma}_x^{[1, -1]}$ et $\hat{\Gamma}_x^{[1, 1]}$, des ensembles respectivement, $\Gamma_x^{[1, -1]}$ et $\Gamma_x^{[1, 1]}$, des fréquences cycliques respectivement des première et seconde matrices de corrélation des observations.

- Choix d'un nombre arbitraire de couples $(\alpha_m, \varepsilon_m)$ $(1 \leq m \leq M)$ tels que pour chacun de ces couples, au moins une source possède la fréquence cyclique à l'ordre 2 $\alpha_m$ pour une matrice de corrélation indicée par $\varepsilon_m$.

- Pour chaque couple $(\alpha_m, \varepsilon_m)$, $(1 \leq m \leq M)$ :

  - choix d'un nombre arbitraire $Q_m$ de retards, $l_{mq}$, $(1 \leq q \leq Q_m)$.
  - Pour chaque valeur du retard, $l_{mq}$ $(1 \leq q \leq Q_m)$,

    - Estimation de la matrice de cumulants d'ordre 2 cycliques des observations blanchies,

$R_{\Delta z \varepsilon_m}^{\alpha_m}(l_{mq}T_e)$, par $\hat{R}_{\Delta z \varepsilon_m}^{\alpha_m}(l_{mq}T_e)(K)$ définie par (31), (29), (32) avec l'indice z à la place de *x*.

- Détection du nombre de sources non déterministes $P_{(\alpha m, \varepsilon m)}$ ayant la fréquence cyclique à l'ordre 2, $\alpha_m$, pour la matrice de corrélation indicée par $\varepsilon_m$. Ce test de détection peut consister en la recherche du rang maximal de l'espace signal des matrices $\hat{R}_{\Delta z \varepsilon_m}^{\alpha_m}(l_{mq}T_e)(K)$. On note $\hat{U}_{(\alpha m, \varepsilon m)}$ la matrice unitaire ($P$ x $P_{(\alpha m, \varepsilon m)}$), obtenue par SVD des matrices précédentes, dont les colonnes engendrent l'espace engendré par les vecteurs directeurs blanchis associés aux sources ayant la fréquence cyclique d'ordre 2, $\alpha_m$, pour la matrice de corrélation indicée par $\varepsilon_m$.

- Réduction de dimension : On note $v(t) \triangleq \hat{U}_{(\alpha m, \varepsilon m)}^{\dagger} z(t)$, de dimension ($P_{(\alpha m, \varepsilon m)}$ x 1) et calcul, pour chaque retard $l_{mq}$ ($1 \leq q \leq Q_m$), des matrices $\hat{R}_{\Delta v \varepsilon_m}^{\alpha_m}(l_{mq}T_e)(K) = \hat{U}_{(\alpha m, \varepsilon m)}^{\dagger} \hat{R}_{\Delta z \varepsilon_m}^{\alpha_m}(l_{mq}T_e)(K) \hat{U}_{(\alpha m, \varepsilon m)}^{* \varepsilon_m}$

- Identification autodidacte des vecteurs directeurs doublement blanchis associés au couple ($\alpha_m$, $\varepsilon_m$) par maximisation par rapport à $U \triangleq$ ($\boldsymbol{u}_1$, $\boldsymbol{u}_2$, ..., $\boldsymbol{u}_{P(\alpha m, \varepsilon m)}$), du critère

$$CI(U) \triangleq \sum_{q=1}^{Q} \sum_{l=1}^{P} \left| \boldsymbol{u}_l^{\dagger} R_z(\tau_q) \boldsymbol{u}_l \right|^2$$

donné dans la référence [7] où $R_z(\tau_q)$ est remplacée par $\hat{R}_{\Delta v \varepsilon_m}^{\alpha_m}(l_{mq}T_e)(K) \hat{R}_{\Delta v \varepsilon_m}^{\alpha_m}(l_{mq}T_e)(K)^{\dagger}$. La matrice $U$ solution est notée $\hat{A}_{nd(\alpha m, \varepsilon m)}'$ et contient une estimée des vecteurs directeurs doublement blanchis des sources non déterministes associés au couple ($\alpha_m$, $\varepsilon_m$).

<u>Filtre</u>

- Calcul d'une estimée de la matrice des vecteurs directeurs des sources non déterministes associés au couple ($\alpha_m$, $\varepsilon_m$) : $\hat{A}_{nd(\alpha m, \varepsilon m)} = \hat{U}_s \hat{\Lambda}_s^{1/2} \hat{U}_{(\alpha m, \varepsilon m)} \hat{A}_{nd(\alpha m, \varepsilon m)}$,
- Concaténation des matrices $\hat{A}_{nd(\alpha m, \varepsilon m)}$ pour tous les couples ($\alpha_m$, $\varepsilon_m$), ($1 < m \leq M$). On obtient la matrice ($N$ x $P$) de $\hat{A}_{nd}$ des vecteurs directeurs des sources non déterministes
- Extraction des sources non déterministes par un filtrage spatial quelconque des observations construit à partir de $\hat{A}_{nd}$.

<u>Traitement des sources déterministes</u>

- Construction du projecteur orthogonal sur l'espace orthogonal aux colonnes de $\hat{A}_{nd}$ : Proj = I - $\hat{A}_{nd}[\hat{A}_{nd}^{\dagger}\hat{A}_{nd}]^{-1}\hat{A}_{nd}^{\dagger}$
- Mise en oeuvre de l'algorithme SOBI [3] à partir des observations $\boldsymbol{w}(t) \triangleq$ Proj $\boldsymbol{x}(t)$ pour identifier les vecteurs directeurs des sources déterministes et extraire celles-ci.

**Séparateurs à l'ordre 4 proposés**

*Séparateurs F3'*

Les séparateurs de la famille F3' sont des séparateurs autodidactes à l'ordre 4 mettant en oeuvre les opérations suivantes :

Etape de blanchiment

- Détection des fréquences cycliques à l'ordre 1 des observations $\gamma$ par un détecteur de fréquences cycliques quelconque et constitution d'une estimée, $\hat{\Gamma}_x^1$, de l'ensemble, $\Gamma_x^1$, des fréquences cycliques $\gamma$.

- Détection des fréquences cycliques à l'ordre 2 des observations, $\alpha\varepsilon$, pour $\varepsilon = -1$ et $\varepsilon = +1$ par un détecteur de fréquences cycliques quelconque et constitution des estimées, $\hat{\Gamma}_x^{[1, -1]}$ et $\hat{\Gamma}_x^{[1, 1]}$, des ensembles respectivement, $\Gamma_x^{[1, -1]}$ et $\Gamma_x^{[1, 1]}$, des fréquences cycliques respectivement des première et seconde matrice de corrélation des observations.

- Estimation de la matrice $R_{\Delta x}(0)$ par $\hat{R}_{\Delta x}(0)(K)$ définie par (53) et (52) pour $I = 0$ à partir d'un nombre d'échantillons $K$ donné

- Détection du nombre de sources $P$ à partir de la décomposition en éléments propres de $\hat{R}_{\Delta x}(0)(K)$. (Toutes les sources non déterministes sont détectées).

- Calcul de la matrice de blanchiment des observations, $T$, où $\hat{T} \overset{\Delta}{=} \hat{\Lambda}_s^{-1/2} \hat{U}_s^\dagger$, de dimension $(P \times N)$, où $\hat{\Lambda}_s$ est la matrice diagonale $(P \times P)$ des $P$ plus grandes valeurs propres de $\hat{R}_{\Delta x}(0)(K) - \lambda_{\min} I$, $\lambda_{\min}$ est la valeur propre minimale de $\hat{R}_{\Delta x}(0)(K)$ et $\hat{U}_s$ est la matrice des vecteurs propres associés. On note $\mathbf{z}(t) \overset{\Delta}{=} \hat{T}\mathbf{x}(t)$. (Les vecteurs directeurs des sources non déterministes sont orthonormalisés).

Etape d'identification

- Estimation de la quadricovariance, $Q_z$, du vecteur $z(t)$ par les expressions (51), (29), (49), (2) et (32) avec l'indice $z$ à la place de $x$.

- Décomposition en éléments propres de $\hat{Q}_z$ et estimation des $P$ matrices propres $M_{zi}$ $(1 \leq i \leq P)$ associées aux $P$ valeurs propres de plus forts modules.

- Diagonalisation conjointe des $P$ matrices propres $M_{zi}$ pondérées par les valeurs propres associées et obtention de la matrice des vecteurs directeurs blanchis des sources non déterministes $\hat{A}_{nd}'$.

Filtre

- Calcul d'une estimée de la matrice des vecteurs directeurs des sources non déterministes $\hat{A}_{nd} = \hat{U}_s \hat{\Lambda}_s^{1/2} \hat{A}_{nd}'$

- Extraction des sources non déterministes par un filtrage spatial quelconque des observations construit à partir de $\hat{A}_{nd}$.

Traitement des sources déterministes

- Construction du projecteur orthogonal sur l'espace orthogonal aux colonnes de $\hat{A}_{nd}$ : Proj $\overset{\Delta}{=}$ I - $\hat{A}_{nd}[\hat{A}_{nd}^\dagger \hat{A}_{nd}]^{-1}\hat{A}_{nd}^\dagger$

- Mise en oeuvre de l'algorithme JADE [4] à partir des observations $\nu(t) \overset{\Delta}{=}$ Proj $\mathbf{x}(t)$ pour identifier les vecteurs directeurs des sources déterministes et extraire celles-ci.

*Séparateurs F4'*

Les séparateurs de la famille F4' sont des séparateurs autodidactes à l'ordre 4 associé à la référence [8] mettant en oeuvre les opérations suivantes :

Etape de blanchiment

- Détection des fréquences cycliques à l'ordre 1 des observations $\gamma$ par un détecteur de fréquences cycliques quelconque et constitution d'une estimée, $\hat{\Gamma}_x^1$, de l'ensemble, $\Gamma_x^1$, des fréquences cycliques $\gamma$.
- Détection des fréquences cycliques à l'ordre 2 des observations, $\alpha\varepsilon$, pour $\varepsilon = -1$ et $\varepsilon = +1$ par un détecteur de fréquences cycliques quelconque et constitution des estimées, $\hat{\Gamma}_x^{[1, -1]}$ et $\hat{\Gamma}_x^{[1, 1]}$, des ensembles respectivement, $\Gamma_x^{[1, -1]}$ et $_I\ \Gamma_x^{[1, 1]}$, des fréquences cycliques respectivement des première et seconde matrice de corrélation des observations.
- Estimation de la matrice $R_{\Delta x}(0)$ par $\hat{R}_{\Delta x}(0)(K)$ définie par (33) et (32) pour $I = 0$ à partir d'un nombre d'échantillons $K$ donné
- Détection du nombre de sources P à partir de la décomposition en éléments propres de $\hat{R}_{\Delta x}(0)(K)$. (Toutes les sources non déterministes sont détectées).
- Calcul de la matrice de blanchiment des observations, $\hat{T}$, où $\hat{T} \triangleq \hat{\Lambda}_s^{-1/2} \hat{U}_s^\dagger$, de dimension *(P x N)*, où $\hat{\Lambda}_s$ est la matrice diagonale *(P x P)* des *P* plus grandes valeurs propres de $\hat{R}_{\Delta x}(0)(K) - \lambda_{min} I$, $\lambda_{min}$ est la valeur propre minimale de $\hat{R}_{\Delta x}(0)(K)$ et $\hat{U}_s$ est la matrice des vecteurs propres associés. On note $z(t) \triangleq \hat{T}x(t)$. (Les vecteurs directeurs des sources non déterministes sont orthonormalisés).

Etape d'identification

- Choix d'un triplet $(\alpha_m, \varepsilon_m, I_{mq})$
- Estimation de la matrice de cumulants d'ordre 2 cycliques des observations blanchies, $R_{\Delta z \varepsilon_m}^{\alpha_m}(I_{mq}T_e)$, par $\hat{R}_{\Delta z \varepsilon_m}^{\alpha_m}(I_{mq}T_e)(K)$ définie par (31), (29), (32).
- Calcul d'une matrice unitaire $\hat{U}_{(\alpha m, \varepsilon m)} = [e_1 \dots e_{P'}]$ où $(P_{(\alpha m, \varepsilon m)} \leq P)$ correspond au nombre de valeurs propres non nul de $\hat{R}_{\Delta z \varepsilon_m}^{\alpha_m}(I_{mq}T_e)(K)$ et $e_k$ $(1 \leq k \leq P')$ sont les vecteurs propres de $\hat{R}_{\Delta z \varepsilon_m}^{\alpha_m}(I_{mq}T_e)(K)$ associées aux $P_{(\alpha m, \varepsilon m)}$ plus fortes valeurs propres.
- Choix de l'ensemble $(\alpha_m, \zeta_m, I_{m1}T_e, I_{m2} T_e, I_{m3}T_e)$.
- Réduction de dimension : On note $v(t) \triangleq \hat{U}_{(\alpha m, \varepsilon m)}^\dagger z(t)$, de dimension $(P_{(\alpha m, \varepsilon m)} \times 1)$ et calcul de l'estimée de la quadricovariance cyclique $\hat{Q}_{v \zeta_m}^{\alpha_m}(I_{m1}T_e, I_{m2} T_e, I_{m3} T_e)(K)$ de $v(t)$ à partir de $\hat{Q}_{z \zeta_m}^{\alpha_m}(I_{m1}T_e, I_{m2}T_e, I_{m3}T_e)(K)$ et de $\hat{U}_{(\alpha m, \zeta m)}$.
- Décomposition en éléments propres de $\hat{Q}_{v \zeta_m}^{\alpha_m}(I_{m1}T_e, I_{m2} T_e, I_{m3} T_e)(K)$ et estimation des $P_{(\alpha m, \varepsilon m)}$ matrices propres $M_{vi}$ $(1 \leq i \leq P_{(\alpha m, \varepsilon m)})$ associées aux $P_{(\alpha m, \varepsilon m)}$ valeurs propres de plus forts modules.
- Diagonalisation conjointe des $P_{(\alpha m, \varepsilon m)}$ matrices propres $M_{vi} M_{vi}^\dagger$ pondérées par les valeurs propres associées et obtention de la matrice des vecteurs directeurs des sources non déterministes doublement blanchis associés à l'ensemble $(\alpha_m, \zeta_m, I_{m1}, I_{m2}, I_{m3})$ : $\hat{A}_{nd(\alpha m, \zeta m)}$,

Filtre

- Calcul d'une estimée de la matrice des vecteurs directeurs des sources non déterministes associés au couple $(\alpha_m, \zeta_m)$ : $\hat{A}_{nd(\alpha m, \zeta m)} = \hat{U}_s \hat{\Lambda}_s^{1/2} \hat{U}_{(\alpha m, \varepsilon m)} \hat{A}nd_{(\alpha m, \varepsilon m)}$,
- Concaténation des matrices $\hat{A}_{nd(\alpha m, \zeta m)}$ pour tous les couples $(\alpha_m, \zeta_m)$, $(1 \leq m \leq M)$. On obtient la matrice *(N x P)*

$\hat{A}_{nd}$ des vecteurs directeurs des sources non déterministes

- Extraction des sources non déterministes par un filtrage spatial quelconque des observations construit à partir de $\hat{A}_{nd}$.

Traitement des sources déterministes

- Construction du projecteur orthogonal sur l'espace orthogonal aux colonnes de $\hat{A}_{nd}$ : Proj = I - $\hat{A}_{nd}[\hat{A}_{nd}{}^\dagger \hat{A}_{nd}]^{-1}\hat{A}_{nd}{}^\dagger$

- Mise en oeuvre de l'algorithme JADE [4] à partir des observations $w(t) \overset{\Delta}{=}$ Proj $x(t)$ pour identifier les vecteurs directeurs des sources déterministes et extraire celles-ci.

**Exemple de simulation du procédé selon l'invention avec le separateur F3'**

Les figures 6A et 6B représentent respectivement, dans un diagramme niveau exprimé en dB, pour 2 sources cyclostationnaires non centrées de direction ($\theta_1$=50° et $\theta_2$=60°), le niveau de spectre après séparation des sources (en utilisant la méthode JADE faisant intervenir l'ensemble des fréquences cycliques d'ordre 1 et les deux ensembles des fréquences cycliques à l'ordre 2) et la formation de voie, après séparation des sources en utilisant l'estimateur classique (Fig.6A) et en utilisant l'estimateur proposé (Fig.6B).

On voit qu'avec l'estimateur empirique la séparation se passe mal car on localise une source en θ=55° alors que les sources ont pour incidences $\theta_1$=50° et $\theta_2$=60°. Toutefois avec l'estimateur proposé on localise bien les deux source en 50° et 60° car la méthode formation de voie sur le premier vecteur identifié trouve un maximum en 49.8° et sur le second un maximum en 60.1°. Les rapports signal sur bruit + brouilleur en sortie de filtrage des deux sources se résument dans le tableau suivant :

|  | Source en $\theta_1$=50° | Source en $\theta_2$=60° |
|---|---|---|
| Estimateurs empiriques $R_{xa}$ et $Q_{xa}$ | SNIR$_1$=15.3dB | SNIR$_2$=7.35dB |
| Estimateurs proposés $R_x$ et $Q_x$ | SNIR$_1$= 22dB | SNIR$_2$=22dB |

Dans la simulation suivante nous nommons l'estimateur proposé par exhaustif. Dans cet exemple on garde la même configuration de signal que précédemment où les deux sources ont toutefois 10dB de rapport signal sur bruit. On compare donc l'estimateur classique empirique à l'estimateur exhaustif. On trace donc le SNIR en dB de la 1$^{ière}$ source en fonction du nombre d'échantillons K.

La figure 7 montre que l'estimateur exhaustif converge vers l'asymptote du Filtre Annuleur Optimal d'Interférences lorsque K→+∞ et que l'estimateur classique est biaisé en convergeant ver 5dB de SNIR (rapport signal sur bruit+brouilleurs) en sortie de filtrage.

*Séparateurs F4'*

Les séparateurs de la famille F4' sont des séparateurs autodidactes à l'ordre 4 mettant en oeuvre les opérations suivantes :

- Détection des fréquences cycliques à l'ordre 1 des observations γ par un détecteur de fréquences cycliques quelconque et constitution d'une estimée, $\hat{\Gamma}_{x,}^1$, de l'ensemble, $\Gamma_{x,}^1$, des fréquences cycliques γ. L'estimation de $\hat{\Gamma}_x^1$ peut se faire comme dans F1'.

- Détection des fréquences cycliques à l'ordre 2 des observations, αε, pour ε = -1 et ε = +1 par un détecteur de fréquences cycliques quelconque et constitution des estimées, $\hat{\Gamma}_x^{[1,-1]}$ et $\hat{\Gamma}_x^{[1,1]}$, des ensembles respectivement, $\Gamma_x^{[1,-1]}$ et $\Gamma_x^{[1,1]}$, des fréquences cycliques respectivement des première et seconde matrice de corrélation des observations.

- Estimation de la matrice $R_{\Delta x}(0)$ par $\hat{R}_{\Delta x}(0)(K)$ définie par (53) et (52) pour *l* = 0 à partir d'un nombre d'échantillons *K* donné

- Détection du nombre de sources P à partir de la décomposition en éléments propres de $\hat{R}_{\Delta x}(0)(K)$. (Toutes les sources non déterministes sont détectées).

- Calcul de la matrice de blanchiment des observations, $\hat{T}$, où $\hat{T}' \overset{\Delta}{=} \hat{\Lambda}_s^{-1/2} \hat{U}_s^\dagger$, de dimension $(P \times N)$, où $\hat{\Lambda}_s$ est la matrice diagonale $(P \times P)$ des $P$ plus grandes valeurs propres de $\hat{R}_{\Delta x}(0)(K) - \lambda_{min} I$, $\lambda_{min}$ est la valeur propre minimale de $\hat{R}_{\Delta x}(0)(K)$ et $\hat{U}_s$ est la matrice des vecteurs propres associés. On note $z(t) \overset{\Delta}{=} \hat{T}x(t)$. (Les vecteurs directeurs des sources non déterministes sont orthonormalisés).

- Choix d'un triplet $(\alpha_m, \varepsilon_m, l_{mq})$

- Estimation de la matrice de cumulants d'ordre 2 cycliques des observations blanchies, $R_{\Delta z \varepsilon_m}^{\alpha_m}(l_{mq} T_e)$, par $\hat{R}_{\Delta z \varepsilon_m}^{\alpha_m}(l_{mq} T_e)(K)$ définie par (31), (29), (32).

- Calcul d'une matrice unitaire $\hat{U}_{(\alpha m, \varepsilon m)} = [e_1 \ldots e_{P'}]$ où $(P_{(\alpha m, \varepsilon m)} \leq P)$ correspond au nombre de valeurs propres non nul de $\hat{R}_{\Delta z \varepsilon_m}^{\alpha_m}(l_{mq} T_e)(K)$ et $e_k$ $(1 \leq k \leq P_{(\alpha m, \varepsilon m)})$ sont les vecteurs propres de $\hat{R} \hat{R}_{\Delta z \varepsilon_m}^{\alpha_m}(l_{mq} T_e)(K)$ associées aux $P_{(\alpha m, \varepsilon m)}$ plus fortes valeurs propres.

- Réduction de dimension : On note $\nu(t) \overset{\Delta}{=} \hat{U}_{(\alpha m, \varepsilon m)}^\dagger z(t)$, de dimension $(P_{(\alpha m, \varepsilon m)} \times 1)$ et calcul de l'estimée de la quadricovariance cyclique $\hat{Q}_{\nu \zeta m}^{\alpha_m}(l_{m1} T_e, l_{m2} T_e, l_{m3} T_e)(K)$ de $\nu(t)$ à partir de $\hat{Q}_{z \zeta m}^{\alpha_m}(l_{m1} T_e, l_{m2} T_e, l_{m3} T_e)(K)$ et de $\hat{U}_{(\alpha m, \zeta m)}$,

- Choix d'un ensemble $(\alpha_m, \zeta_m, l_{m1}, l_{m2}, l_{m3})$ $(1 \leq m \leq M)$ tels que pour chacun de ces couples, au moins une source possède la fréquence cyclique à l'ordre 4 $\alpha_m$ pour une quadricovariance indicée par $\zeta_m$ et $(l_{m1} T_e, l_{m2} T_e, l_{m3} T_e)$.

- L'ensemble de ces valeurs est par exemple choisi afin qu'il y ait compatibilité avec les paramètres des cumulants d'ordre 2 $(\alpha_m, \varepsilon_m, l_{mq})$

- Pour chaque ensemble $(\alpha_m, \zeta_m, l_{m1}, l_{m2}, l_{m3})$ $(1 \leq m \leq M)$

- Estimation de la quadricovariance cyclique, $Q_{\nu \zeta m}^{\alpha_m}(l_{m1} T_e, l_{m2} T_e, l_{m3} T_e)$, du vecteur $\nu(t)$. On obtient $\hat{Q}_{\nu \zeta m}^{\alpha_m}(l_{m1} T_e, l_{m2} T_e, l_{m3} T_e)(K)$.

- Décomposition en éléments propres de $\hat{Q}_{\nu \zeta m}^{\alpha_m}(l_{m1} T_e, l_{m2} T_e, l_{m3} T_e)(K)$ et estimation des $P_{(\alpha m, \varepsilon m)}$ matrices propres $M_{vi}$ $(1 \leq i \leq P_{(\alpha m, \varepsilon m)})$ associées aux $P_{(\alpha m, \varepsilon m)}$ valeurs propres de plus forts modules.

- Diagonalisation conjointe des $P_{(\alpha m, \varepsilon m)}$ matrices propres $M_{vi}$ pondérées par les valeurs propres associées et obtention de la matrice des vecteurs directeurs des sources non déterministes doublement blanchis associés à l'ensemble $(\alpha_m, \zeta_m, l_{m1}, l_{m2}, l_{m3})$ : $\hat{A}_{nd(\alpha m, \zeta m)}$,

- Calcul d'une estimée de la matrice des vecteurs directeurs des sources non déterministes associés au couple $(\alpha_m, \zeta_m)$ : $\hat{A}_{nd(\alpha m, \zeta m)} = \hat{U}_s \hat{\Lambda}_s^{1/2} \hat{U}_{(\alpha m, \varepsilon m)} \hat{A}_{nd(\alpha m, \varepsilon m)}$,

- Concaténation des matrices $\hat{A}_{nd(\alpha m, \zeta m)}$ pour tous les couples $(\alpha_m, \zeta_m)$, $(1 \leq m \leq M)$. On obtient la matrice $(N \times P)$ $\hat{A}_{nd}$ des vecteurs directeurs des sources non déterministes

- Extraction des sources non déterministes par un filtrage spatial quelconque des observations construit à partir de $\hat{A}_{nd}$.

- Construction du projecteur orthogonal sur l'espace orthogonal aux colonr $\overset{\Delta}{=}$ de $\hat{A}_{nd}$ : $Proj = I - \hat{A}_{nd}[\hat{A}_{nd}^\dagger \hat{A}_{nd}]^{-1} \hat{A}_{nd}^\dagger$

- Mise en oeuvre de l'algorithme JADE [4] à partir des observations $w(t) \overset{\Delta}{=} Proj\, x(t)$ pour identifier les vecteurs directeurs des sources déterministes et extraire celles-ci.

La mise en oeuvre est résumée dans la figure 8 pour M=1 (un seul ensemble $(\alpha_m, \zeta_m, l_{m1}, l_{m2}, l_{m3})$ est utilisé).

Les étapes du procédé selon l'invention décrites précédemment sont notamment appliquées dans les techniques de séparation précitées, SOBI, SOBI cyclique, JADE, JADE cyclique.

Sans sortir du cadre de l'invention les étapes du procédé précédemment décrit sont par exemple utilisées pour réaliser la goniométrie de signaux reçus au niveau d'un récepteur.

Pour la goniométrie classique, le procédé utilise par exemple :

- des méthodes de type MUSIC décrites dans la référence [10] de R.O Schmidt avec la matrice de covariance : $\hat{R}_{\Delta x}(0)(K)$

- des méthodes de type goniométrie cyclique données dans la référence [11] de W.A.Gardner avec la matrice de covariance cyclique : $R_{\Delta x \varepsilon_m}^{\alpha_m}(l_{mq} T_e)$

**EP 1 359 685 B1**

- des méthodes de goniométrie à l'ordre 4 décrites dans la référence [12] de P.Chevalier , A.Ferreol, JP.Denis avec la quadricovariance : $\hat{Q}_{x\zeta m}^{0}(0,0,0)(K)$

- des méthodes de goniométrie cyclique à l'ordre 4 avec la quadricovariance cyclique : $\hat{Q}_{x\zeta m}^{\alpha_m}(l_{m1}T_e, l_{m2}T_e, l_{m3}T_e)(K)$

BIBLIOGRAPHIE

[1] C. JUTTEN, J. HERAULT, « Blind separation of sources, Part I: An adaptive algorithm based on neuromimetic architecture », Signal Processing, Elsevier, Vol 24, pp 1-10, 1991.
[2] P. COMON, P. CHEVALIER, « Blind source separation: Models, Concepts, Algorithms and Performance », Chapter 5 of the book Unsupervised adaptive filtering - Tome 1 - Blind Source Separation, pp. 191- 235, Dir. S. Haykins, Wiley, 445 p, 2000.
[3] A. BELOUCHRANI, K. ABED-MERAIM, J.F. CARDOSO, E. MOULINES, «A blind source separation technique using second-order statistics », IEEE Trans. Signal Processing, Vol.45, N°2, pp 434-444, Feb. 1997.
[4] J.F. CARDOSO, A. SOULOUMIAC, « Blind beamforming for non-gaussian signais », IEE Proceedings-F, Vol. 140, N°6, pp 362-370, Dec. 1993.
[5] A. FERREOL, P. CHEVALIER, « On the behavior of current second and higher order blind source separation methods for cyclostationary sources », IEEE Trans. Signal Processing, Vol 48, N° 6, pp. 1712-1725, June 2000.
[6] K. ABED-MERAIM, Y. XIANG, J.H. MANTON, Y. HUA, « Blind source separation using second-order cyclostationary statistics », IEEE Trans. Signal Processing, Vol.49, N°4, pp 694-701, April 2001.
[7] P. CHEVALIER, « Optimal separation of independent narrow-band sources - Concept and Performance », Signal Processing, Elsevier, Special issue on Blind Source Separation and Multichannel Deconvolution, Vol 73, N°1-2, pp. 27-47, Feb. 1999.
[8] A. FERREOL, P. CHEVALIER, « Higher Order Blind Source Separation using the Cyclostationarity Property of the Signals », ICASSP, Munich (Germany), pp 4061-4064, Apr. 1997.
[9] SV SCHELL et W.GARDNER « Detection of the number of cyclostationnary signais in unknows interference ande noïse «, Proc of Asilonan conf on signal , systems et computers 5-7 nov 90.
[10] R.O Schmidt A signal subspace approach to multiple emitters location and spectral estimation, PhD Thesis, Stanford University, CA , Nov 1981.)
[11] W.A. Gardner, « Simplification of MUSIC and ESPRIT by exploitation cyclostationarity « , Proc. IEEE, vol. 76 n. 7, Juillet 1988.
[12] P.Chevalier, A.Ferreol , JP.Denis « New geometrical results about 4-th order direction finding methods performances » , EUSIPCO, Trieste , pp923-926, 1996.

**Revendications**

1. Procédé de traitement d'antennes sur des signaux cyclostationnaires potentiellement non centrés, **caractérisé en ce qu'**il comporte au moins une étape où un ou des estimateurs non biaisés des statistiques des cumulants à l'ordre n, avec n supérieur ou égal à 4, est obtenu à partir des statistiques d'ordre r, avec r=1 à n-1, et pour une ou plusieurs valeurs de r, une étape de correction de l'estimateur des statistiques à partir des fréquences cycliques détectées à l'ordre r.

2. Procédé selon la revendication 1 **caractérisé en ce qu'**il comporte une étape de séparation des sources émettrices des signaux reçus en utilisant le ou les estimateurs.

3. Procédé selon la revendication 1 **caractérisé en ce que** les fréquences cycliques sont des fréquences détectées à l'ordre 1 ou à l'ordre 2.

4. Utilisation du procédé selon l'une des revendications 1 à 3 pour séparer des sources cyclostationnaires potentiellement non centrées dans des techniques de séparation SOBI, ou SOBI cyclique, JADE, ou JADE cyclique.

5. Utilisation du procédé selon l'une des revendications 1 à 4 pour réaliser la goniométrie de signaux reçus.

**Claims**

1. An antenna processing method with respect to potentially non-centred cyclo-stationary signals, **characterised in that** it comprises at least one step in which one or more non-biased estimators of statistics of n-order cumulants, with n being greater than or equal to 4, is/are obtained on the basis of r-order statistics, with r=1 to n-1, and a step of correcting the statistics estimator for one or more values of r on the basis of r-or er detected cyclic frequencies.

2. The method according to claim 1, **characterised in that** it comprises a step of separating the emission sources of received signals using the one or more estimators.

3. The method according to claim 1, **characterised in that** the cyclic frequencies are first-order or second-order detected frequencies.

4. The use of the method according to any one of claims 1 to 3 for separating potentially non-centred cyclo-stationary sources in SOBI or cyclic SOBI, JADE or cyclic JADE separation techniques.

5. The use of the method according to any one of claims 1 to 4 for carrying out the goniometry of received signals.


**Patentansprüche**

1. Antennenbearbeitungsverfahren in Bezug auf potentiell nicht zentrierte zyklostationäre Signale, **dadurch gekennzeichnet, dass** es wenigstens einen Schritt, bei dem ein oder mehrere biasfreie Schätzglieder von Statistiken von Kumulanten n-ter Ordnung, wobei n gleich oder größer als 4 ist, auf der Basis von Statistiken r-ter Ordnung erhalten wird/werden, wobei r=1 bis n-1 ist, und einen Schritt des Korrigierens des Statistikschätzglieds für ein oder mehrere Werte von r auf der Basis von detektierten zyklischen Frequenzen r-ter Ordnung beinhaltet.

2. Verfahren nach Anspruch 1, **dadurch gekennzeichnet, dass** es einen Schritt des Trennens der Emissionsquellen von empfangenen Signalen mittels der ein oder mehreren Schätzglieder beinhaltet.

3. Verfahren nach Anspruch 1, **dadurch gekennzeichnet, dass** die zyklischen Frequenzen detektierte Frequenzen erster oder zweiter Ordnung sind.

4. Anwendung des Verfahrens nach einem der Ansprüche 1 bis 3 zum Trennen von potentiell nicht zentrierten zyklostationären Quellen in SOBI oder zyklischen SOBI, JADE oder zyklischen JADE Trenntechniken.

5. Anwendung des Verfahrens nach einem der Ansprüche 1 bis 4 zum Durchführen der Goniometrie von empfangenen Signalen.

EP 1 359 685 B1

FIG.1

FIG.2

◇  Antenne élémentaire

FIG.3

28

FIG.4

FIG.5

## FIG.6A

Spectre après séparation de sources

## FIG.6B

Spectre après séparation de sources.

Formation de voie
après séparation de sources

Formation de voie
après séparation de sources

## FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Blind separation of sources, Part I: An adaptive algorithm based on neuromimetic architecture. **C. JUTTEN ; J. HERAULT.** Signal Processing. Elsevier, 1991, vol. 24, 1-10
- Blind source separation: Models, Concepts, Algorithms and Performance. **P. COMON ; P. CHEVALIER.** Unsupervised adaptive filtering - Tome 1 - Blind Source Separation. Wiley, 2000, vol. 445, 191-235
- **A. BELOUCHRANI ; K. ABED-MERAIM ; J.F. CARDOSO ; E. MOULINES.** A blind source separation technique using second-order statistics. *IEEE Trans. Signal Processing,* Février 1997, vol. 45 (2), 434-444
- **J.F. CARDOSO ; A. SOULOUMIAC.** Blind beamforming for non-gaussian signais. *IEE Proceedings-F,* Décembre 1993, vol. 140 (6), 362-370
- **A. FERREOL ; P. CHEVALIER.** On the behavior of current second and higher order blind source separation methods for cyclostationary sources. *IEEE Trans. Signal Processing,* Juin 2000, vol. 48 (6), 1712-1725
- **K. ABED-MERAIM ; Y. XIANG ; J.H. MANTON ; Y. HUA.** Blind source separation using second-order cyclostationary statistics. *IEEE Trans. Signal Processing,* Avril 2001, vol. 49 (4), 694-701

- Optimal separation of independent narrow-band sources - Concept and Performance. **P. CHEVALIER.** Signal Processing. Elsevier, Février 1999, vol. 73, 27-47
- Higher Order Blind Source Separation using the Cyclostationarity Property of the Signals. **A. FERREOL ; P. CHEVALIER.** ICASSP. ICASSP, Avril 1997, 4061-4064
- **SV SCHELL ; W.GARDNER.** Detection of the number of cyclostationnary signais in unknows interference ande noïse. *Proc of Asilonan conf on signal,* 05 Novembre 1990
- A signal subspace approach to multiple emitters location and spectral estimation. **R.O SCHMIDT.** PhD Thesis. Stanford University, Novembre 1981
- **W.A. GARDNER.** Simplification of MUSIC and ESPRIT by exploitation cyclostationarity. *Proc. IEEE,* Juillet 1988, vol. 76 (7
- **P.CHEVALIER ; A.FERREOL ; JP.DENIS.** New geometrical results about 4-th order direction finding methods performances. *EUSIPCO, Trieste,* 1996, 923-926